# EUROPEAN PATENT APPLICATION

(11) **EP 4 808 060 A1**
(43) Date of publication of application: **16.09.2026**
(21) Application number: 24893436.6
(22) Date of filing: 19.11.2024
(51) Int. Cl.: H04L 27/26, H04L 5/00

(54) **SYMBOL PROCESSING METHOD, COMMUNICATION APPARATUS, AND COMMUNICATION SYSTEM**

(30) Priority: 23.11.2023 CN 202311585145
(71) Applicant: Huawei Technologies Co., Ltd., Shenzhen, Guangdong 518129 (CN)
(72) Inventor: GUO, Bei, Shenzhen, Guangdong 518129 (CN); LIU, Fengwei, Shenzhen, Guangdong 518129 (CN)
(74) Representative: Thun, Clemens
(86) International application number: PCT/CN2024/133045
(87) International publication number: WO 2025/108279

(57) **Abstract**

A symbol processing method, a communication apparatus, and a communication system are provided, relating to the field of communication technologies. The method includes: A first communication apparatus generates a first slot, where the first slot includes a plurality of orthogonal frequency division multiplexing OFDM symbols, the plurality of OFDM symbols include a first OFDM symbol and a second OFDM symbol, the first OFDM symbol is a 1^{st} symbol among the plurality of OFDM symbols, the first OFDM symbol includes a first cyclic prefix CP, the second OFDM symbol includes a second CP, a length of the first CP is greater than a length of the second CP, the length of the first CP is greater than a first value, and the first value corresponds to a subcarrier spacing; and the first communication apparatus sends the first slot, and correspondingly, a second communication apparatus receives the first slot. According to embodiments of this application, signal loss can be reduced, and demodulation performance can be ensured.

## Description

This application claims priority to Chinese Patent Application No. 202311585145.8, filed with China National Intellectual Property Administration on November 23, 2023, and entitled "SYMBOL PROCESSING METHOD, COMMUNICATION APPARATUS, AND COMMUNICATION SYSTEM", which is incorporated herein by reference in its entirety.

### TECHNICAL FIELD

This application relates to the field of communication technologies, and in particular, to a symbol processing method, a communication apparatus, and a communication system.

### BACKGROUND

Cyclic prefixes (cyclic prefixes, CPs) may be used as guard intervals between symbols to mitigate multipath effects of channels. A transmitter may copy a portion of the signal at the tail of each symbol (that is, a symbol component) and add the portion to the beginning of that symbol to obtain a CP of the symbol, thereby increasing the duration of the guard interval.

For example, in a wireless communication system, a terminal device and a network device may communicate with each other based on orthogonal frequency division multiplexing (orthogonal frequency division multiplexing, OFDM) symbols. Each OFDM symbol corresponds to a fast Fourier transform (fast Fourier transform, FFT) reception window, and a receive end receives the corresponding OFDM symbol in the FFT reception window. Each OFDM symbol includes a CP and a data symbol. A length of the FFT reception window corresponding to each OFDM symbol is a length of the data symbol in the OFDM symbol, and a start position of the FFT reception window corresponding to the OFDM symbol is determined based on an end position of the CP.

However, due to phenomena such as refraction and reflection while signals are transmitted over a channel, the signals are transmitted to the receive end through a plurality of transmission paths. When a time difference of arrival between two transmission paths of the channel is large, OFDM symbols on some transmission paths cannot completely fall within corresponding FFT reception windows. Consequently, parts of the signals in the OFDM symbols are lost, and demodulation performance is reduced.

### SUMMARY

Embodiments of this application provide a symbol processing method, a communication apparatus, and a communication system, to reduce signal loss and ensure demodulation performance.

According to a first aspect, an embodiment of this application provides a symbol processing method. The method may be performed by a first communication apparatus. The first communication apparatus herein may be the first communication apparatus, or may be a processor, a module, a chip, a chip system, or the like that is in the first communication apparatus and that implements the method. This is not limited herein. The method includes:
generating a first slot, where the first slot includes a plurality of orthogonal frequency division multiplexing OFDM symbols, the plurality of OFDM symbols include a first OFDM symbol and a second OFDM symbol, the first OFDM symbol is a 1^{st} OFDM symbol among the plurality of OFDM symbols, the first OFDM symbol includes a first cyclic prefix CP, the second OFDM symbol includes a second CP, a length of the first CP is greater than a length of the second CP, the length of the first CP is greater than a first value, and the first value corresponds to a subcarrier spacing; and sending the first slot.

In this embodiment of this application, the first value may be a CP length specified in an existing protocol. The first value corresponds to a subcarrier spacing. That is, a value of the first value varies with a subcarrier spacing. In this embodiment of this application, the length of the first CP may be extended, that is, more signals may be copied from the tail of the first OFDM symbol to the front of the first OFDM symbol, so that the first OFDM symbol transmitted on each transmission path can fall within the corresponding FFT reception window, thereby reducing signal loss and improving demodulation performance.

With reference to the first aspect, in a possible implementation, the first communication apparatus is a terminal device, and the method further includes:
receiving first indication information, where the first indication information indicates the length of the first CP.

With reference to the first aspect, in a possible implementation, the first indication information is carried in any one of the following: downlink control information, radio resource control signaling, a media access control (media access control, MAC) control element (control element, CE), a system message (system information block, SIB), or a physical downlink shared channel (physical downlink shared channel, PDSCH).

With reference to the first aspect, in a possible implementation, the first communication apparatus is a network device, and the method further includes:
determining the length of the first CP based on a delay spread of a first channel, where the delay spread is a difference in transmission delay of the first slot between a first transmission path and a second transmission path in the first channel, and the first channel carries the first slot.

With reference to the first aspect, in a possible implementation, the first communication apparatus is a terminal device, the first slot is included in a first subframe, and the method further includes:
receiving second indication information, where the second indication information includes at least one of the following: a first timing advance TA, a start time of the first CP, or a second difference, where the first TA indicates a timing advance of a start time of the first subframe relative to an arrival time of a downlink subframe, the second difference is a difference between the start time of the first CP and a start time of a sixth symbol component in the first OFDM symbol, an end position of the sixth symbol component is an end position of the first CP, and a length of the sixth symbol component is greater than or equal to the length of the second CP; and the sending the first slot includes: sending the first subframe based on the second indication information.

In this embodiment of this application, the sixth symbol component may be understood as a CP before the CP of the first OFDM symbol is extended, and the length of the sixth symbol component is equal to a length of the CP before the CP of the first OFDM symbol is extended. When the length of the CP of the first OFDM symbol changes, the network device may indicate, by using the second indication information, time at which the terminal device sends the first subframe, to ensure uplink timing synchronization between the terminal device and the network device.

According to a second aspect, an embodiment of this application provides a symbol processing method. The method may be performed by a second communication apparatus. The second communication apparatus herein may be the second communication apparatus, or may be a processor, a module, a chip, a chip system, or the like that is in the second communication apparatus and that implements the method. This is not limited herein. The method includes:
receiving a first slot, where the first slot includes a plurality of orthogonal frequency division multiplexing OFDM symbols, the plurality of OFDM symbols include a first OFDM symbol and a second OFDM symbol, the first OFDM symbol is a 1^{st} OFDM symbol among the plurality of OFDM symbols, the first OFDM symbol includes a first cyclic prefix CP, the second OFDM symbol includes a second CP, a length of the first CP is greater than a length of the second CP, the length of the first CP is greater than a first value, and the first value corresponds to a subcarrier spacing; and parsing the first slot.

With reference to the second aspect, the second communication apparatus is a network device, the first slot is included in a first subframe, and the method further includes:
sending second indication information, where the second indication information includes at least one of the following: a first timing advance TA, a start time of the first CP, or a second difference, where the first TA indicates a timing advance of a start time of the first subframe relative to an arrival time of a downlink subframe, the second difference is a difference between the start time of the first CP and a start time of a sixth symbol component in the first OFDM symbol, an end position of the sixth symbol component is an end position of the first CP, and a length of the sixth symbol component is greater than or equal to the length of the second CP.

With reference to the first aspect or the second aspect, in a possible implementation, when an index of the first OFDM symbol in the first subframe is 0 or 7 ∗ 2^{µ}, the first value is equal to (144β*2^{-µ}+16β); or when an index of the first OFDM symbol in the first subframe is not equal to 0 or 7*2^{µ}, the first value is equal to 144β*2^{-µ}, where the first subframe includes the first slot, β corresponds to a maximum subcarrier quantity and a maximum subcarrier spacing for transmission bandwidth, and µ corresponds to a subcarrier spacing configuration. For example, β may be *κ*, and *κ*=Ts/Tc=64.

In this embodiment of this application, the first value may be understood as a length before the first CP is extended. Each symbol in the first subframe may correspond to one index, and lengths of CPs corresponding to OFDM symbols with different indexes in the first subframe are different. The first value is related to the index of the first OFDM symbol in the first subframe. A value of the first value may vary with the index of the first OFDM symbol in the first subframe. That the length of the first CP is greater than the first value may be understood as that a quantity of sampling points corresponding to the first CP is greater than a quantity of sampling points corresponding to the first value, or duration corresponding to the first CP is greater than duration corresponding to the first value.

With reference to the first aspect or the second aspect, in a possible implementation, the length of the first CP corresponds to the delay spread of the first channel, the delay spread indicates the difference between the transmission delay of the first slot on the first transmission path of the first channel and the transmission delay of the first slot on the second transmission path of the first channel, and the first channel carries the first slot.

In this embodiment of this application, the length of the first CP is greater than the delay spread of the first channel, so that it is ensured that the first OFDM symbols on both the first transmission path and the second transmission path can be completely received within corresponding FFT reception windows, thereby avoiding signal loss. In addition, no signal in another OFDM symbol is received within the FFT reception window corresponding to the first OFDM symbol, thereby avoiding inter-symbol interference.

With reference to the first aspect or the second aspect, in a possible implementation, the first transmission path is a first arrival transmission path in a plurality of transmission paths of the first channel, and the second transmission path is a last arrival transmission path in the plurality of transmission paths.

In this embodiment of this application, the first CP is determined based on a transmission delay difference between the first transmission path and the second transmission path, so that it can be ensured that the first OFDM symbol on each of the plurality of transmission paths can fall within a corresponding FFT reception window, thereby avoiding signal loss and inter-symbol interference.

With reference to the first aspect or the second aspect, in a possible implementation, the length of the first CP is greater than or equal to the delay spread.

With reference to the first aspect or the second aspect, in a possible implementation, the length of the first CP is determined based on the delay spread and at least one of a modulation and coding scheme (modulation and coding scheme, MCS), a code rate, or a modulation scheme.

In this embodiment of this application, different MCSs or modulation schemes correspond to different error vector magnitude (error vector magnitude, EVM) requirements. For example, in a high-order modulation scheme, a high MCS, or a high code rate, a smaller EVM indicator needs to be satisfied to ensure demodulation accuracy. In a low-order modulation scheme, a low MCS, or a low code rate, a large EVM may also satisfy demodulation accuracy. Therefore, after the length of the first CP is determined based on the delay spread of the channel, the length of the first CP may be further adjusted based on the modulation scheme, the MCS, or the code rate, to satisfy demodulation performance.

With reference to the first aspect or the second aspect, in a possible implementation, the length of the first CP is positively correlated with the MCS; the length of the first CP is positively correlated with a modulation order corresponding to the modulation scheme; or the length of the first CP is positively correlated with the code rate.

With reference to the first aspect or the second aspect, in a possible implementation, the plurality of OFDM symbols are used to carry a PDSCH or a physical uplink shared channel (physical uplink shared channel, PUSCH).

In this embodiment of this application, the first OFDM symbol is a 1^{st} OFDM symbol among the plurality of OFDM symbols, used to carry a PDSCH or a PUSCH, in the first slot, and a loss of service data on the OFDM symbol can be effectively avoided by extending the length of the CP of the first OFDM symbol.

With reference to the first aspect or the second aspect, in a possible implementation, an end position of the first OFDM symbol is the same as a start position of the second OFDM symbol, and a first symbol component in the first OFDM symbol is the same as a second symbol component in the second OFDM symbol, where an end position of the first symbol component is the end position of the first OFDM symbol, the second symbol component is located before a third symbol component in the second OFDM symbol, an end position of the third symbol component is the same as an end position of the second OFDM symbol, a length of the third symbol component is less than or equal to the length of the second CP, and the second CP is obtained based on the third symbol component.

In this embodiment of this application, the first OFDM symbol and the second OFDM symbol are contiguous in the time domain, and the first OFDM symbol is located before the second OFDM symbol. The end position of the first symbol component in the first OFDM symbol is the same as a start position of the second CP. The first symbol component is the same as the second symbol component, the second CP is the same as the third symbol component, and a symbol component including the first symbol component and the second CP is the same as a symbol component including the second symbol component and the third symbol component. Therefore, the symbol component including the first symbol component and the second CP may be considered as an equivalent CP of the second OFDM symbol, and a length of the equivalent CP of the second OFDM symbol is a sum of the length of the second CP and a length of the first symbol component, thereby implementing equivalent extension of the CP of the second OFDM symbol. Therefore, it can be ensured that the second OFDM symbol can be completely received within a reception window corresponding to the second OFDM symbol, so that signal loss is avoided, and a single-carrier signal has a stronger anti-inter-symbol interference (inter-symbol interference, ISI) capability and a low adjacent channel leakage ratio (adjacent channel leakage ratio, ACLR).

With reference to the first aspect or the second aspect, in a possible implementation, a fourth symbol component in the first OFDM symbol is the same as a fifth symbol component in the second OFDM symbol, a start position of the fourth symbol component is the same as the end position of the first CP, an end position of the second symbol component is the same as a start position of the fifth symbol component, an end position of the fifth symbol component is the same as a start position of the third symbol component, and a sum of lengths of the fifth symbol component and the third symbol component is equal to the length of the second CP.

In this embodiment of this application, the first symbol component and the second CP are contiguous in the time domain, and the second symbol component, the fifth symbol component, and the third symbol component are contiguous in the time domain. A symbol component including the first symbol component and the second CP is the same as a symbol component including the second symbol component, the fifth symbol component, and the third symbol component. Therefore, the symbol component including the first symbol component and the second CP may be used as an equivalent CP of the second OFDM symbol, thereby implementing equivalent extension of the CP of the second OFDM symbol. Therefore, it can be ensured that the second OFDM symbol can be completely received within a reception window corresponding to the second OFDM symbol, so that signal loss is avoided.

With reference to the first aspect or the second aspect, in a possible implementation, the second indication information includes the first TA, the first TA is determined based on a first difference or the length of the first CP, and the first difference is a difference between the length of the first CP and the length of the second CP.

In this embodiment of this application, the first TA may be determined based on the first difference or the length of the first CP, or the first TA may be determined based on an extension amount of the first CP. The first TA is determined based on an extended length of the CP or the extension amount of the CP, so that the first TA is configured more properly.

With reference to the first aspect or the second aspect, in a possible implementation, the start time of the first subframe is the start time of the sixth symbol component.

With reference to the first aspect or the second aspect, in a possible implementation, a value range of the first TA includes (TA2-CP1+ΔT, TA2), where CP1 is the length of the first CP, ΔT is a delay spread of a first channel that carries the first subframe, TA2 is a TA corresponding to a second subframe, and the second subframe includes a second slot, a length of a CP of a third OFDM symbol in the second slot is less than the length of the first CP and is greater than or equal to a length of a CP of another OFDM symbol in the second slot, and the third OFDM symbol is a 1^{st} OFDM symbol among a plurality of OFDM symbols used to carry a PUSCH or a PDSCH in the second slot.

In this embodiment of this application, the second subframe may be understood as a first subframe before the first CP is extended, or a subframe that does not support CP extension. The third OFDM symbol may be understood as a first OFDM symbol before the first CP is extended, and the second TA may be understood as a TA corresponding to the first subframe before the first CP is extended. When the first TA is set to TA2, a data symbol in the first OFDM symbol on the first transmission path (that is, a path on which a transmission arrives first) is completely received within a first FFT reception window. When the first TA is set to TA2-CP1+ΔT, a data symbol in the first OFDM symbol on the second transmission path (that is, a path on which a transmission arrives last) is completely received within the first FFT reception window. Therefore, the value range of the first TA is determined based on the second TA, the length of the first CP, and the delay spread, so that it can be ensured that the first OFDM symbols on the plurality of transmission paths of the channel can be completely received within the first FFT reception window, thereby avoiding signal loss.

With reference to the first aspect or the second aspect, in a possible implementation, the start time of the first subframe is the start time of the first CP.

With reference to the first aspect or the second aspect, in a possible implementation, a value range of the first TA includes (TA2-CP1+ΔT + ΔD, TA2+ΔD), where CP1 is the length of the first CP, ΔT is a delay spread of a first channel that carries the first subframe, ΔD is the first difference, TA2 is a TA corresponding to a second subframe, the second subframe includes a second slot, a length of a CP of a third OFDM symbol in the second slot is less than the length of the first CP and is greater than or equal to a length of a CP of another OFDM symbol in the second slot, and the third OFDM symbol is a 1^{st} OFDM symbol among a plurality of OFDM symbols used to carry a PUSCH or a PDSCH in the second slot.

In this embodiment of this application, when the first TA is set to TA2+ΔD, a data symbol in the first OFDM symbol on the first transmission path (that is, a path on which a transmission arrives first) is completely received within a first FFT reception window. When the first TA is set to TA2-CP1+ΔT + ΔD, a data symbol in the first OFDM symbol on the second transmission path (that is, a path on which a transmission arrives last) is completely received within the first FFT reception window. Therefore, the value range of the first TA is determined based on the second TA, the length of the first CP, the first difference, and the delay spread, so that it can be ensured that the first OFDM symbols on the plurality of transmission paths of the channel can be completely received within the first FFT reception window, thereby avoiding signal loss.

With reference to the first aspect or the second aspect, in a possible implementation, the second indication information includes at least one of the following of the first TA: a quantity of sampling points corresponding to the first TA, a quantity of modulation symbols corresponding to the first TA, duration corresponding to the first TA, or a quantity of unit time corresponding to the first TA.

With reference to the first aspect or the second aspect, in a possible implementation, the second indication information is carried in any one of the following: downlink control information, radio resource control signaling, a media access control MAC control element CE, a system message SIB, a physical downlink shared channel PDSCH, uplink control information, or a physical uplink shared channel PUSCH.

According to a third aspect, an embodiment of this application provides a communication apparatus, configured to perform the method according to the first aspect or any possible implementation of the first aspect. The communication apparatus includes a unit for performing the method according to the first aspect or any possible implementation of the first aspect.

According to a fourth aspect, an embodiment of this application provides a communication apparatus, configured to perform the method according to the second aspect or any possible implementation of the second aspect. The communication apparatus includes a unit for performing the method according to the second aspect or any possible implementation of the second aspect.

In the third aspect and the fourth aspect, the communication apparatuses may each include a transceiver unit and a processing unit. For specific descriptions of the transceiver unit and the processing unit, refer to apparatus embodiments shown below.

According to a fifth aspect, an embodiment of this application provides a communication apparatus. The communication apparatus includes a processor, configured to perform the method according to any one of the first aspect to the fourth aspect or any possible implementation of the first aspect to the fourth aspect. Alternatively, the processor is configured to execute a program stored in a memory; and when the program is executed, the method according to any one of the first aspect and the second aspect or any possible implementation of the first aspect and the second aspect is performed.

In a possible implementation, the memory is located outside the communication apparatus.

In a possible implementation, the memory is located inside the communication apparatus.

In this embodiment of this application, the processor and the memory may alternatively be integrated into one device. In other words, the processor and the memory may alternatively be integrated together.

In a possible implementation, the communication apparatus further includes a transceiver. The transceiver is configured to receive a signal or send a signal.

According to a sixth aspect, an embodiment of this application provides a communication apparatus. The communication apparatus includes a logic circuit and an interface, where the logic circuit is coupled to the interface, the logic circuit is configured to generate a first slot, and the interface is configured to input the first slot.

It may be understood that, for the communication apparatus shown in the sixth aspect, refer to the first aspect or the following specific implementations.

According to a seventh aspect, an embodiment of this application provides a communication apparatus. The communication apparatus includes a logic circuit and an interface, where the logic circuit is coupled to the interface, the interface is configured to input a first slot, and the logic circuit is configured to parse the first slot.

It may be understood that, for the communication apparatus shown in the seventh aspect, refer to the second aspect or the following specific implementations.

According to an eighth aspect, an embodiment of this application provides a computer-readable storage medium. The computer-readable storage medium is configured to store a computer program. When the computer program is run on a computer, the method according to any one of the first aspect and the second aspect or any possible implementation of the first aspect and the second aspect is performed.

According to a ninth aspect, an embodiment of this application provides a computer program product. The computer program product includes a computer program. When the computer program is run on a computer, the method according to any one of the first aspect and the second aspect or any possible implementation of the first aspect and the second aspect is performed.

According to a tenth aspect, an embodiment of this application provides a computer program. When the computer program is run on a computer, the method according to any one of the first aspect and the second aspect or any possible implementation of the first aspect and the second aspect is performed.

According to an eleventh aspect, an embodiment of this application provides a communication system. The communication system includes a first communication apparatus and a second communication apparatus, the first communication apparatus is configured to perform the method according to the first aspect or any possible implementation of the first aspect, and the second communication apparatus is configured to perform the method according to the second aspect or any possible implementation of the second aspect.

### BRIEF DESCRIPTION OF DRAWINGS

The following describes accompanying drawings in embodiments of this application.
FIG. 1A is a diagram of an architecture of a communication system according to an embodiment of this application;
FIG. 1B is a diagram of an architecture of another communication system according to an embodiment of this application;
FIG. 2A is a diagram of a structure of a transmitter according to an embodiment of this application;
FIG. 2B is a diagram of a structure of another transmitter according to an embodiment of this application;
FIG. 3 is a diagram of a delay spread according to an embodiment of this application;
FIG. 4 is a diagram of a structure of a symbol according to an embodiment of this application;
FIG. 5 is a schematic flowchart of generation of a DFT-s-OFDM symbol according to an embodiment of this application;
FIG. 6 is a schematic flowchart of generation of an SC-QAM symbol according to an embodiment of this application;
FIG. 7A is a diagram of a signal interaction scenario according to an embodiment of this application;
FIG. 7B is a diagram of another signal interaction scenario according to an embodiment of this application;
FIG. 8 is a diagram of a structure of an OFDM symbol according to an embodiment of this application;
FIG. 9 is an interaction diagram of a communication method according to an embodiment of this application;
FIG. 10 is a diagram of an OFDM symbol receiving scenario according to an embodiment of this application;
FIG. 11A is a diagram of a structure of another OFDM symbol according to an embodiment of this application;
FIG. 11B is a diagram of a structure of still another OFDM symbol according to an embodiment of this application;
FIG. 12 is an interaction diagram of another communication method according to an embodiment of this application;
FIG. 13 is a diagram of a start time of a subframe according to an embodiment of this application;
FIG. 14A is a diagram of another OFDM symbol receiving scenario according to an embodiment of this application;
FIG. 14B is a diagram of still another OFDM symbol receiving scenario according to an embodiment of this application;
FIG. 15 is another diagram of a start time of a subframe according to an embodiment of this application;
FIG. 16A is a diagram of still another OFDM symbol receiving scenario according to an embodiment of this application;
FIG. 16B is a diagram of still another OFDM symbol receiving scenario according to an embodiment of this application;
FIG. 17 is a diagram of a structure of a communication apparatus according to an embodiment of this application;
FIG. 18 is a diagram of a structure of another communication apparatus according to an embodiment of this application; and
FIG. 19 is a diagram of a structure of still another communication apparatus according to an embodiment of this application.

### DESCRIPTION OF EMBODIMENTS

In the specification, claims, and accompanying drawings of this application, the terms "first", "second", and the like are merely intended to distinguish between different objects, but are not intended to limit a sequence, time sequences, priorities, or importance degrees of a plurality of objects. In embodiments of this application, ''a plurality of'' means two or more. In addition, terms such as "include" and "have" and any other variants thereof are intended to cover non-exclusive inclusion. For example, a process, a method, a system, a product, or a device that includes a series of steps or units is not limited to the listed steps or units, but optionally further includes steps or units that are not listed, or optionally further includes other steps or units inherent to the process, the method, the product, or the device. In addition, unless otherwise specified, the character "/" generally indicates an "or" relationship between associated objects.

An "embodiment" mentioned in the specification mean that a specific feature, structure, or characteristic described in combination with the embodiment may be included in at least one embodiment of this application. The phrase shown in various positions in the specification may not necessarily refer to a same embodiment, and is not an independent or alternative embodiment exclusive from another embodiment. It may be understood explicitly and implicitly by a person skilled in the art that embodiments described in the specification may be combined with other embodiments.

It should be understood that, in this application, "at least one (item)" means one or more, "a plurality of" means two or more, "at least two (items)" means two, three, or more, and "and/or" is used to describe an association relationship between associated objects, and indicates that there may be three relationships. For example, "A and/or B" may indicate three cases: Only A exists, only B exists, and both A and B exist, where A and B may be singular or plural. The character "/" generally indicates an "or" relationship between the associated objects. "At least one of the following items (pieces)" or a similar expression thereof means any combination of these items, including any combination of singular items (pieces) or plural items (pieces). For example, at least one item (piece) of a, b, or c may indicate a, b, c, "a and b", "a and c", "b and c", or "a, b, and c", where a, b, and c may be singular or plural.

Technical solutions provided in embodiments of this application may be applied to various communication systems, for example, a satellite communication system, and a system integrating satellite communication with a cellular network. A cellular network system may include but is not limited to a 5G system, a global system for mobile communications (global system for mobile communications, GSM), a code division multiple access (code division multiple access, CDMA) system, a wideband code division multiple access (wideband code division multiple access, WCDMA) system, a general packet radio service (general packet radio service, GPRS), a long term evolution (long term evolution, LTE) system, an LTE frequency division duplex (frequency division duplex, FDD) system, an LTE time division duplex (time division duplex, TDD) system, an advanced long term evolution (advanced long term evolution, LTE-A) system, a new radio (new radio, NR) system, an evolved system of the NR system, an LTE-based access to unlicensed spectrum (LTE-based access to unlicensed spectrum, LTE-U) system, an NR-based access to unlicensed spectrum (NR-based access to unlicensed spectrum, NR-U) system, a universal mobile telecommunications system (universal mobile telecommunications system, UMTS), a worldwide interoperability for microwave access (worldwide interoperability for microwave access, WiMAX) communication system, a wireless local area network (wireless local area network, WLAN), wireless fidelity (wireless fidelity, Wi-Fi), a next generation communication system, another communication system, or the like. Generally, a conventional communication system supports a limited quantity of connections and is easy to implement. However, with the development of communication technologies, a mobile communication system not only supports conventional communication, but also supports, for example, device-to-device (device-to-device, D2D) communication, machine-to-machine (machine-to-machine, M2M) communication, machine type communication (machine type communication, MTC), vehicle-to-vehicle (vehicle-to-vehicle, V2V) communication, and another future evolved communication system. Embodiments of this application may also be applied to these communication systems. The satellite communication system may include various non-terrestrial network systems, for example, networks in which wireless frequency transmission is performed by a satellite, an unmanned aircraft system (unmanned aircraft system, UAS) platform, or the like. Examples are not enumerated herein.

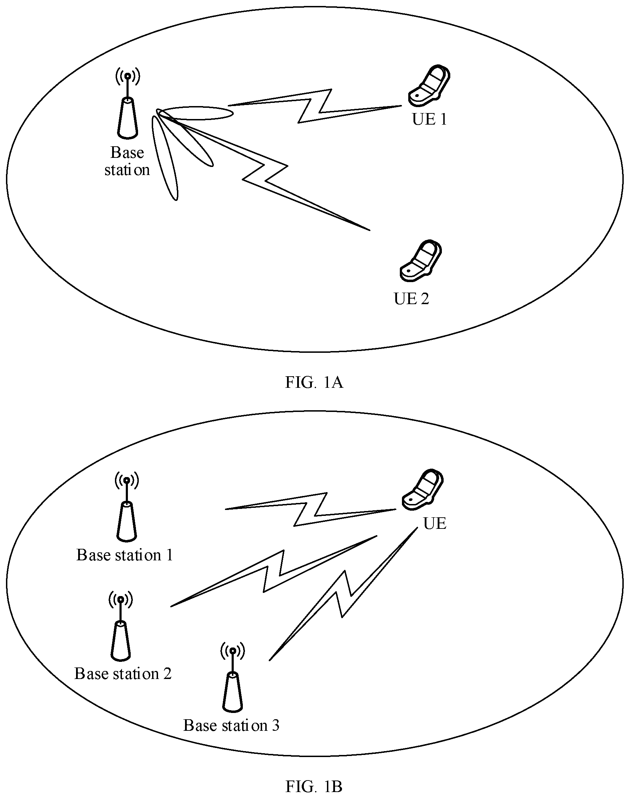

The technical solutions provided in this application may also be applied to machine type communication (machine type communication, MTC), long term evolution-machine (long term evolution-machine, LTE-M), a device-to-device (device-to-device, D2D) network, a machine-to-machine (machine-to-machine, M2M) network, an internet of things (internet of things, IoT) network, or another network. The IoT network may include, for example, an internet of vehicles. Communication manners in an internet of vehicles system are collectively referred to as vehicle-to-everything (vehicle-to-everything, V2X, where X can stand for anything). For example, the V2X may include vehicle-to-vehicle (vehicle-to-vehicle, V2V) communication, vehicle-to-infrastructure (vehicle-to-infrastructure, V2I) communication, vehicle-to-pedestrian (vehicle-to-pedestrian, V2P) communication, vehicle-to-network (vehicle-to-network, V2N) communication, or the like. For example, in FIG. 1A or FIG. 1B shown below, terminal devices may communicate with each other by using a D2D technology, an M2M technology, or a V2X technology.

As shown in FIG. 1A or FIG. 1B, the communication system provided in this embodiment of this application may include at least one access network device and at least one terminal device.

The access network device and the terminal device are separately described as follows.

For example, the access network device may be a next generation NodeB (next generation NodeB, gNB), a next generation evolved NodeB (next generation evolved NodeB, ng-eNB), an access network device in future 6G communication, or the like. The access network device may be any device having a wireless transceiver function, and includes but is not limited to the base station described above. The base station may alternatively be a base station in a future communication system like a 6th generation communication system. Optionally, the access network device may be an access node, a wireless relay node, a wireless backhaul node, or the like in a wireless local area network (wireless fidelity, Wi-Fi) system. Optionally, the access network device may be a radio controller in a cloud radio access network (cloud radio access network, CRAN) scenario. Optionally, the access network device may be a wearable device, a vehicle-mounted device, or the like. Optionally, the access network device may alternatively be a small cell, a transmission reception point (transmission reception point, TRP) (or may be referred to as a transmission point), a transmission measurement function (Transmission measurement function, TMF), or the like. It may be understood that the access network device may alternatively be a base station or the like in a future evolved public land mobile network (public land mobile network, PLMN).

In some deployments, the base station (for example, the gNB) may include a central unit (central unit, CU) and a distributed unit (distributed unit, DU). To be specific, functions of the base station in an access network are divided, some functions of the base station are deployed on a CU, and remaining functions are deployed on a DU. In addition, a plurality of DUs share one CU. This can reduce costs and facilitates network expansion. In some other deployments of the base station, the CU may be further divided into a CU-control plane (control plane, CP), a CU-user plane (user plane, UP), and the like. In still some other deployments of the base station, the base station may alternatively be an open radio access network (open radio access network, ORAN) architecture or the like. A specific type of the base station is not limited in this application.

For ease of description, the following describes the methods in this application by using an example in which the access network device is a base station.

For example, the terminal device may also be referred to as a user equipment (user equipment, UE), a terminal, or the like. The terminal device is a device having a wireless transceiver function, and may be deployed on land, including an indoor device or an outdoor device, a handheld device, a wearable device, or a vehicle-mounted device; may be deployed on water, for example, on a ship; or may be deployed in air, for example, on an airplane, a balloon, or a satellite. The terminal device may be a mobile phone (mobile phone), a tablet computer (Pad), a computer having a wireless transceiver function, a virtual reality (virtual reality, VR) terminal device, an augmented reality (augmented reality, AR) terminal device, a wireless terminal in industrial control (industrial control), a wireless terminal in self-driving (self-driving), a wireless terminal in remote medical (remote medical), a wireless terminal in smart grid (smart grid), a wireless terminal in transportation safety (transportation safety), a wireless terminal in smart city (smart city), a wireless terminal in smart home (smart home), a customer-premises equipment (customer-premises equipment, CPE), or the like. It may be understood that the terminal device may alternatively be a terminal device in a future 6G network, a terminal device in a future evolved PLMN, or the like.

It may be understood that the terminal device shown in this application may not only include a vehicle (for example, an entire vehicle) in an internet of vehicles, and may also include a vehicle-mounted device, a vehicle-mounted terminal, or the like in the internet of vehicles. A specific form of the terminal device used in the internet of vehicles is not limited in this application.

For ease of description, the following describes the methods in this application by using an example in which the terminal device is a UE.

The communication system shown in FIG. 1A includes one base station and a plurality of UEs, for example, a UE 1 and a UE 2 in FIG. 1A. In the communication system, the base station may send a downlink signal like configuration information or downlink control information (downlink control information, DCI) to the UE 1 and the UE 2, and the UE 1 and the UE 2 each may send an uplink signal like an SRS or a physical uplink shared channel (physical uplink shared channel, PUSCH) to the base station. It may be understood that, for a communication manner between UEs, refer to the foregoing descriptions. Details are not described herein again.

The communication system shown in FIG. 1B includes one UE and a plurality of base stations, for example, a base station 1, a base station 2, and a base station 3 in FIG. 1B. In the communication system, the base station 1, the base station 2, and the base station 3 may simultaneously transmit data and control signaling for the UE.

A plurality of antennas may be configured for the foregoing communication devices, such as the base station and the UE in FIG. 1A or FIG. 1B. The plurality of antennas may include at least one transmit antenna for sending a signal, at least one receive antenna for receiving a signal, and the like. A specific structure of each communication device is not limited in embodiments of this application. Optionally, the communication system may further include other network entities, for example, a network controller and a mobility management entity. This is not limited in embodiments of this application.

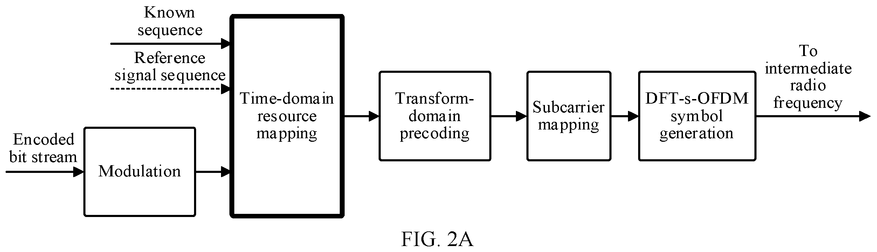

In the communication system shown in FIG. 1A or FIG. 1B, a terminal device and a network device may communicate with each other based on an orthogonal frequency division multiplexing (orthogonal frequency division multiplexing, OFDM) symbol or a single-carrier symbol. For example, communication may be performed by using a discrete Fourier transform-spread-orthogonal frequency division multiplexing (discrete Fourier transform-spread-OFDM, DFT-s-OFDM) symbol or a single-carrier quadrature amplitude modulation (Single-carrier Quadrature Amplitude Modulation, SC-QAM) symbol. For example, as shown in FIG. 2A, when the terminal device communicates with the network device by using a DFT-s-OFDM waveform, a transmitter includes but is not limited to the following functional modules:
a modulation module, configured to map an encoded bit into a modulation symbol based on a modulation order, where the modulation symbol may also be referred to as a complex symbol;
a time-domain resource mapping module, configured to divide all modulation symbols in a slot into a plurality of block signals according to a mapping rule or an arrangement rule, where this process is also referred to as serial-to-parallel conversion;
a transform-domain precoding module (which may also be referred to as a discrete Fourier transform module), configured to convert, in a unit of a block signal, the plurality of block signals into signals that can be mapped to frequency domain subcarriers;
a subcarrier mapping module, configured to map the signals that can be mapped to frequency domain subcarriers to subcarriers; and
a DFT-s-OFDM symbol generation module, configured to perform inverse fast Fourier transform on data of the subcarrier mapping module, add a CP to obtain a DFT-s-OFDM symbol, and send the DFT-s-OFDM symbol to an intermediate radio frequency module.

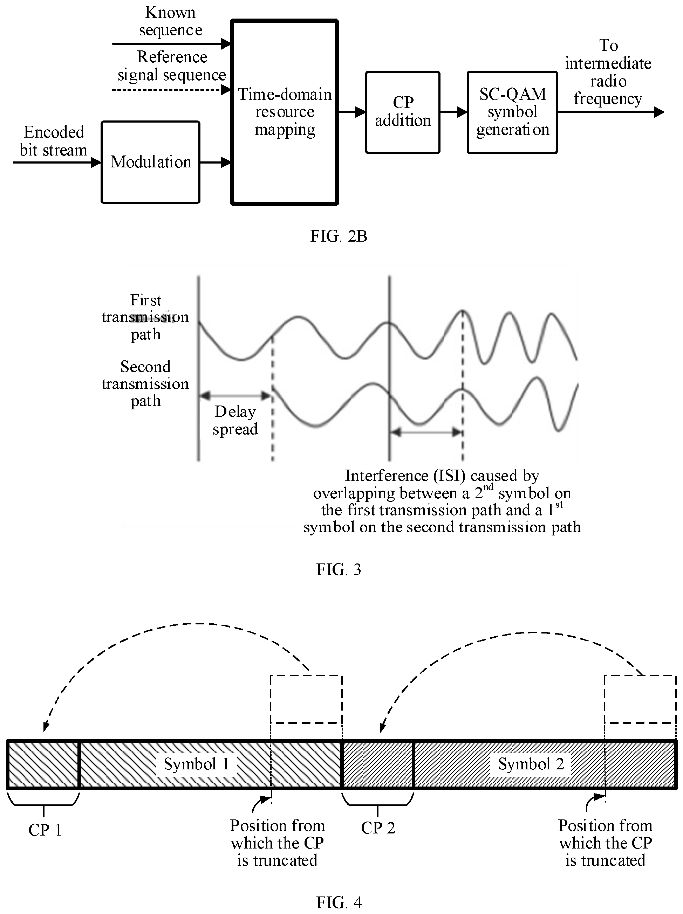

As shown in FIG. 2B, when the terminal device communicates with the network device by using an SC-QAM waveform, a structure of the transmitter includes but is not limited to the following functional modules: a modulation module, a time-domain resource mapping module, a CP adding module, and an SC-QAM symbol generation module.

For example, an input of the time-domain resource mapping module shown in FIG. 2A or FIG. 2B may include a modulation symbol and a known sequence, and an output of the time-domain resource mapping module may be a complex array or a complex vector including DFT-s-OFDM symbols or SC-QAM symbols.

Optionally, the input of the time-domain resource mapping module may further include a reference signal sequence, for example, a phase tracking reference signal (phase tracking reference signal, PTRS) sequence.

The following briefly describes technical concepts in embodiments of this application.

### 1. Delay spread

Due to phenomena such as refraction and reflection while signals are transmitted over a channel, the signals are transmitted to a receive end through a plurality of transmission paths. These phenomena may also be referred to as multipath effects of the channel, and the channel may also be referred to as a multipath channel. Signals received by the receive end include signals transmitted on the plurality of transmission paths, and signals on different transmission paths arrive at different time. The delay spread is a time difference of arrival between different transmission paths in the plurality of transmission paths of the channel. As shown in FIG. 3, signals may be transmitted on a first transmission path and a second transmission path. Signals transmitted on the first transmission path arrive at a time T0, signals transmitted on the second transmission path arrive at a time T1, and a delay spread may be T1-T0.

For example, a time difference of arrival between a transmission path on which a transmission arrives first and a transmission path on which a transmission arrives last in a channel may be referred to as a maximum delay spread of the channel.

In a multipath channel, signals transmitted on different transmission paths arrive at the receive end at different time, resulting in inter-symbol interference (ISI). For example, in the time domain, a 1^{st} symbol on the second transmission path in FIG. 3 overlap a 2^{nd} symbol on the first transmission path, that is, the receive end receives the 1^{st} symbol and the 2^{nd} symbol at the same time, resulting in inter-symbol interference.

### 2. Cyclic prefix (cyclic prefix, CP)

Cyclic prefixes (denoted as CPs below) may be used as guard intervals between symbols to mitigate multipath effects of channels. A transmitter may copy a portion of a signal at the tail of each symbol (that is, a symbol component) and add the portion to the beginning of the symbol to obtain a CP of the symbol, thereby increasing the duration of the guard interval. FIG. 4 is a diagram of a time domain structure in which a CP is used as a guard interval between symbols. In FIG. 4, two symbols are provided: a symbol 1 and a symbol 2. A CP of the symbol 1 refers to a cyclic structure (for example, a CP 1 in FIG. 4) formed by copying a symbol component between a position from which the CP is truncated and an end position in the symbol 1 and adding the symbol component to the front of the symbol 1. A CP of the symbol 2 refers to a cyclic structure (for example, a CP 2 in FIG. 4) formed by copying a symbol component between a position from which the CP is truncated and an end position in the symbol 2 and adding the symbol component to the front of the symbol 2. The CP of the symbol 2 is used as a guard interval between the symbol 1 and the symbol 2, and the CP of the symbol 1 is used as a guard interval between the symbol 1 and a symbol before the symbol 1 (not shown in FIG. 4).

For example, when a length of a CP of a symbol is greater than a maximum delay spread of a channel, linear convolution of the channel and a transmitted signal may be converted into cyclic convolution of the channel and the transmitted signal, so that generation of ISI can be avoided.

For example, the symbol may include an OFDM symbol, a DFT-s-OFDM symbol, an SC-QAM symbol, and the like.

The DFT-s-OFDM symbol represents a single-carrier symbol whose waveform is a DFT-s-OFDM waveform, and the DFT-s-OFDM symbol includes a data symbol and a CP. A length of the data symbol is determined based on a subcarrier spacing (subcarrier spacing, SCS), that is, a length of the CP and a length of the DFT-s-OFDM symbol are determined based on the SCS.

For example, the SCS, the length of the data symbol, and the length of the CP may satisfy the following formulas: ${T}_{data} = \frac{1}{SCS}$ ${T}_{cp} = \frac{{s}_{cp}}{{s}_{data}} {T}_{data} = \frac{{s}_{cp}}{{s}_{data} \times SCS}$

T_{data} represents the length (unit: µs) of the data symbol, T_{cp} represents the length (unit: µs) of the CP, s_{data} represents a quantity of sampling points corresponding to the length of the data symbol, and s_{cp} represents a quantity of sampling points corresponding to the length of the CP. It can be learned from the foregoing formulas that a larger SCS indicates a shorter length of the CP.

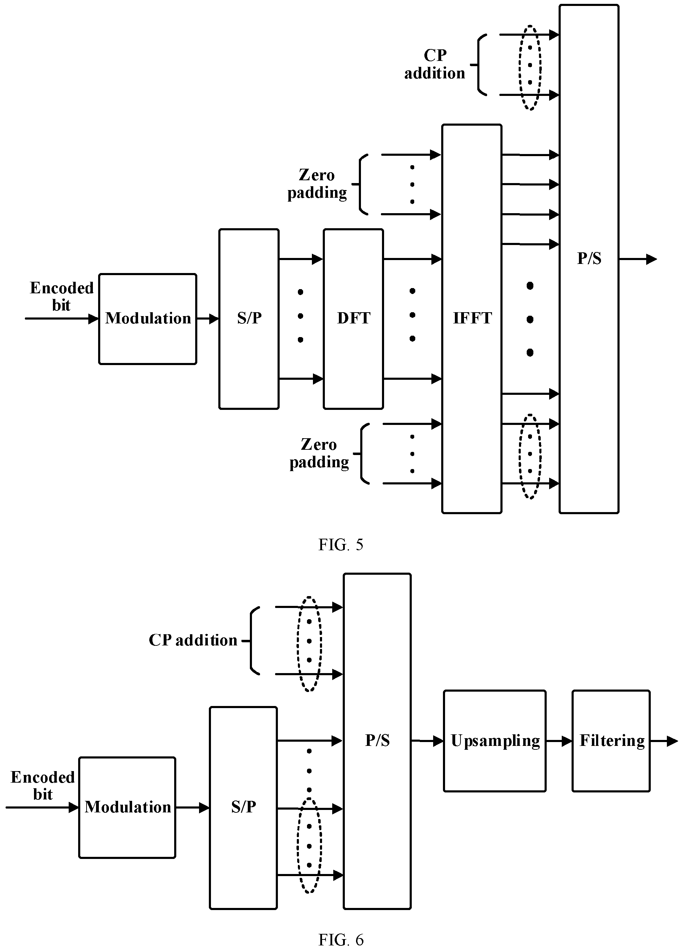

FIG. 5 is a schematic flowchart of generation of a DFT-s-OFDM symbol according to an embodiment of this application. As shown in FIG. 5, a transmitter first modulates encoded bit streams to obtain modulation symbols (a modulation scheme includes pi/2-binary phase shift keying (binary phase shift Keying, BPSK), quadrature phase shift keying (quadrature phase shift keying, QPSK), 16 quadrature amplitude modulation (quadrature amplitude modulation, QAM), 64QAM, 256QAM, or the like); and the transmitter needs to group the modulation symbols based on a scheduling parameter, for example, bandwidth, that is, perform serial (serial) to parallel (parallel) conversion (S/P) on the modulation symbols. Discrete Fourier transform (discrete Fourier transform, DFT) (or referred to as frequency-domain precoding) is first performed on grouped modulation symbols, and subcarrier mapping is then performed. After the subcarrier mapping, the transmitter performs inverse fast Fourier transform (inverse fast Fourier transform, IFFT) and CP adding operations. The transmitter performs parallel-to-serial conversion (P/S) on a CP-added signal, to obtain a DFT-s-OFDM symbol.

FIG. 6 is a schematic flowchart of generation of an SC-QAM symbol according to an embodiment of this application. As shown in FIG. 6, a transmitter first modulates encoded bit streams to obtain modulation symbols, and performs serial-to-parallel conversion (S/P) on the modulation symbols. Then, the transmitter performs CP adding, upsampling, and filtering operations on grouped modulation symbols, to obtain an SC-QAM symbol.

### 3. Timing advance (timing advance, TA)

In an uplink transmission process, because distances from different terminal devices to a network device are different, time differences of arrival between signals sent by the different terminal devices at the network device are also different. When the terminal devices receive downlink signals sent by the network device and then send uplink signals, the uplink signals arrive at the network device at different times. To ensure orthogonality of uplink transmission and avoid intra-cell (intra-cell) interference, the network device requires that signals that are of different terminals and that are from a same subframe but on different frequency-domain resources arrive at the network device at basically the same time. For example, a time difference of arrival between uplink signals sent by different terminal devices falls within a CP range, so that the network device can correctly receive the uplink data sent by the terminals. Therefore, a timing advance is required for uplink sending of the terminal device, and the TA is a difference between start time at which a downlink subframe is received (that is, an arrival time of the downlink subframe) and time at which an uplink subframe is transmitted (a sending time of the uplink subframe).

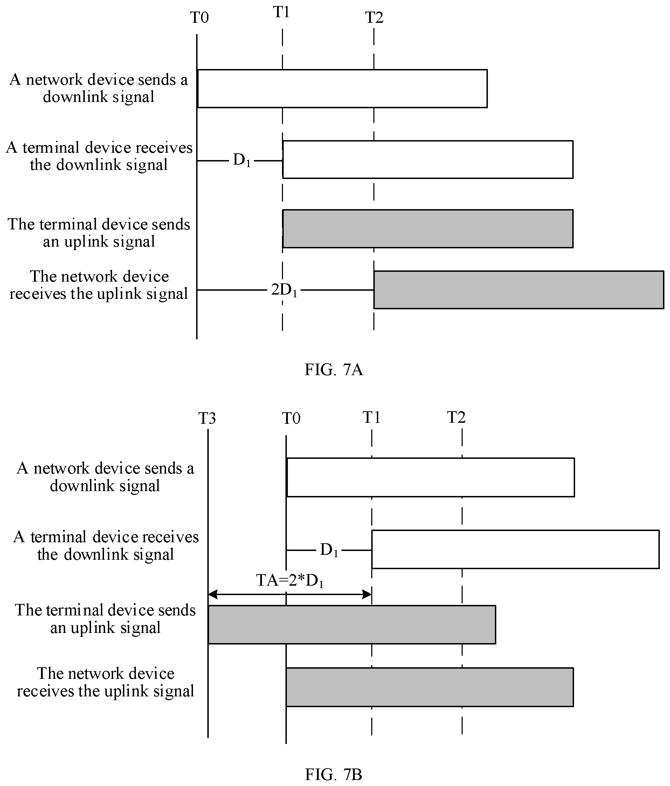

If the terminal device sends an uplink signal and then receives a downlink signal, the network device cannot receive the uplink signal at expected time. Consequently, the terminal device is not synchronized with the network device in uplink timing. For example, as shown in FIG. 7A, the network device sends a downlink signal at a time T0, the terminal device receives the downlink signal and sends an uplink signal at a time T1, and the network device receives the uplink signal at a time T2. That is, the network device cannot receive the uplink signal at expected time (the time T0). Consequently, the network device is not synchronized with the terminal device in uplink timing. Therefore, a timing advance is required when the terminal device sends an uplink signal. For example, TA=2*D₁, where D₁ is a transmission delay between the terminal device and the network device. As shown in FIG. 7B, the network device sends a downlink signal at a time T0, the terminal device receives the downlink signal at a time T1, the terminal device sends an uplink signal at a time T3, and the network device receives the uplink signal at the time T0. That is, the network device receives the uplink signal at expected time, so that the network device is uplink-synchronized with the terminal device. A time difference between the time T1 and the time T3 is TA=2*D₁.

For example, the timing advance TA satisfies the following formula: $TA = \left({N}_{TA}+{N}_{TA _ offset}\right) ∗ {T}_{C}$

N_{TA_offset} is a fixed offset used to calculate the timing advance, T_{C} is a time unit, and N_{TA} may be obtained or updated by using a timing advance command (timing advance command, TAC) field carried in a random access response (random access response, RAR) or a media access control (media access control, MAC) control element (control element, CE).

N_{TA_offset} may be configured based on n-TimingAdvanceOffset of a serving cell. For example, a value of N_{TA_offset} may be 0, 25600, 39936, or 13792, and expressed in terms of Tc. For example, Tc is 0.5 nanoseconds. If the serving cell does not configure n-TimingAdvanceOffset signaling for the terminal device, for the value of N_{TA_offset}, refer to Table 7.1.2-2 in the protocol 38.133.

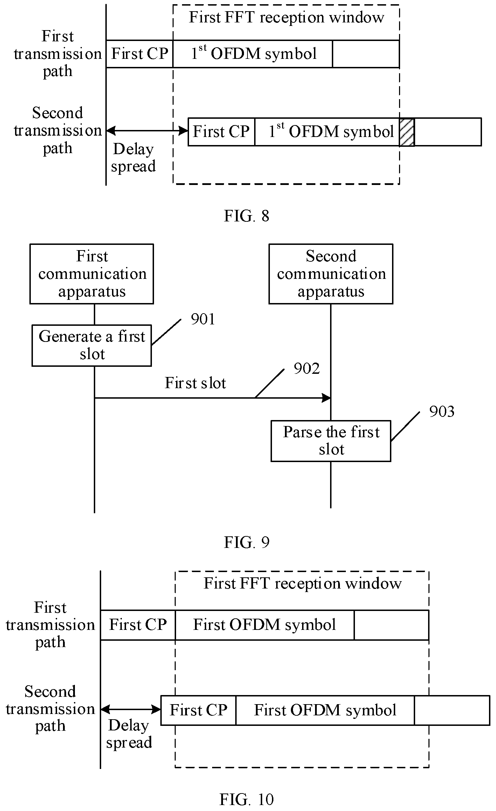

FIG. 8 is a diagram of a structure of an OFDM symbol according to an embodiment of this application. As shown in FIG. 8, a length of a fast Fourier transform (fast Fourier transform, FFT) reception window corresponding to each OFDM symbol is a length of a data symbol in the OFDM symbol, and a start position of the FFT reception window corresponding to each OFDM symbol is determined based on an end position of a CP. For example, a start position of an FFT reception window corresponding to a 1^{st} OFDM symbol is an end position of a CP corresponding to the 1^{st} OFDM symbol in received signals corresponding to a first transmission path. A start position of an FFT reception window corresponding to a 2^{nd} OFDM symbol is an end position of a CP corresponding to the 2^{nd} OFDM symbol in the received signals corresponding to the first transmission path.

For example, the 1^{st} OFDM symbol is transmitted through the first transmission path and the second transmission path. When a transmission delay difference (that is, a delay spread) between the first transmission path and the second transmission path is greater than a length of the CP (that is, a first CP) of the first OFDM symbol, received signals corresponding to the second transmission path cannot completely fall within the FFT reception window determined in the foregoing manner. The first transmission path and the second transmission path are two different transmission paths in a plurality of transmission paths of a channel. Specifically, for the 1^{st} OFDM symbol, a portion of a signal that arrives at a receive end through the second transmission path is lost (as shown by a diagonal-striped block in FIG. 8). The portion of the signal shown by the diagonal-striped block does not fall within the FFT reception window corresponding to the 1^{st} OFDM symbol, and the portion of the signal is not copied to the front of a start position of the 1^{st} OFDM symbol. Therefore, the portion of the signal is a wanted signal that is lost. This reduces demodulation performance and affects coverage. In addition, when the 1^{st} OFDM symbol is an OFDM symbol in which a DMRS is located, channel estimation accuracy based on the DMRS is reduced.

In view of this, embodiments of this application provide a symbol processing method, to reduce signal loss and inter-symbol interference, thereby improving demodulation performance. The method is applied to the communication system shown in FIG. 1A or FIG. 1B, or the method is applied to a first communication apparatus and a second communication apparatus. The first communication apparatus may be the terminal device or the network device described above, and the second communication apparatus may be the network device or the terminal device described above.

It may be understood that, although a relay node is not related in the method shown below, a person skilled in the art may learn that, when a receiving party and a sending party communicate with each other, a forward operation may be performed by using the relay node.

It may be understood that in an interaction diagram in this application, an example in which a network device and a terminal device are execution bodies of interaction illustration is used to illustrate the method. However, the execution bodies of the interaction illustration are not limited in this application. For example, the network device in the interaction diagram may alternatively be a chip, a chip system, or a processor that supports the network device in implementing the method, or may be a logical node, a logical module, or software that can implement all or some functions of the network device. The terminal device in the interaction diagram may alternatively be a chip, a chip system, or a processor that supports the terminal in implementing the method.

FIG. 9 is an interaction diagram of a communication method according to an embodiment of this application. As shown in FIG. 9, the method includes but is not limited to the following steps.

901. A first communication apparatus generates a first slot, where the first slot includes a plurality of OFDM symbols, the plurality of OFDM symbols include a first OFDM symbol and a second OFDM symbol, the first OFDM symbol is a 1^{st} OFDM symbol among the plurality of OFDM symbols, the first OFDM symbol includes a first CP, the second OFDM symbol includes a second CP, a length of the first CP is greater than a length of the second CP, the length of the first CP is greater than a first value, and the first value corresponds to a subcarrier spacing.

For example, the length of the first CP may include a quantity of modulation symbols corresponding to the first CP, a quantity of sampling points corresponding to the first CP, or duration of the first CP. The length of the first CP is greater than the length of the second CP, to be specific, the quantity of modulation symbols corresponding to the first CP is greater than a quantity of modulation symbols corresponding to the second CP, or the quantity of sampling points corresponding to the first CP is greater than a quantity of sampling points corresponding to the second CP, or the duration of the first CP is greater than duration of the second CP.

The plurality of OFDM symbols are used to carry a physical downlink shared channel (physical downlink shared channel, PDSCH) or a physical uplink shared channel (physical uplink shared channel, PUSCH). That is, the first OFDM symbol is a 1^{st} OFDM symbol among the plurality of OFDM symbols used to carry a PDSCH or a PUSCH in the first slot.

For example, the first value may be a CP length specified in an existing protocol. The first value corresponds to a subcarrier spacing. That is, a value of the first value varies with a subcarrier spacing. For example, a correspondence between the first value and the subcarrier spacing may be shown in Table 1. As shown in Table 1, when the SCS is 120 kilohertz (kilohertz, kHz), the first value may be 586 nanoseconds (nanoseconds, ns). When the SCS is 480 kHz, the first value may be 146 ns.

**Table 1**

| SCS (kHz) | First value (ns) |
|---|---|
| 120 | ~586 |
| 480 | ~146 |
| 960 | ~73 |
| 1920 | ~37 |

It may be understood that the mapping relationship between the subcarrier spacing and the first value shown in Table 1 is merely an example, and the values of the first value shown in Table 1 should not be understood as a limitation on this application. The first value in this embodiment of this application may alternatively be set to another value.

In a possible implementation, the first slot is included in a first subframe, and each symbol in the first subframe may correspond to one index. The first value is related to an index of the first OFDM symbol in the first subframe. The value of the first value may vary with the index of the first OFDM symbol in the first subframe. For example, when the index of the first OFDM symbol in the first subframe is 0 or 7 ∗ 2^{µ}, the first value is X1; or when the index of the first OFDM symbol in the first subframe is not 0 or 7 ∗ 2^{µ}, the first value is X2. X1 is greater than X2. For example, a difference between X1 and X2 is 16β. β corresponds to a maximum subcarrier quantity and a maximum subcarrier spacing for transmission bandwidth.

For example, when the index of the first OFDM symbol in the first subframe is 0 or 7 ∗ 2^{µ}, the first value is equal to 144β ∗ 2^{-µ} + 16β; or when the index of the first OFDM symbol in the first subframe is not equal to 0 or 7 ∗ 2^{µ}, the first value is equal to 144β ∗ 2^{-µ}, where µ corresponds to a subcarrier spacing configuration.

For example, β may be *κ*, where *κ* is a ratio of Ts to Tc, that is, *κ*=Ts/Tc=64, and both Ts and Tc are time units. Tc=1/(Δfₘₐₓ·N_{f}), where Δfₘₐₓ is a maximum subcarrier spacing for transmission bandwidth in NR, and N_{f} is a quantity of sampling points corresponding to a maximum subcarrier quantity for the transmission bandwidth in NR. For example, Δfₘₐₓ=480·10³ Hz, and N_{f}=4096. Ts=1/(Δf_{ref}·N_{f,ref}), Δf_{ref} =15·10³ Hz, and N_{f,ref}=2048. Δf_{ref} is a subcarrier spacing for transmission bandwidth in LTE, and N_{f,ref} is a quantity of sampling points corresponding to a maximum subcarrier quantity for the transmission bandwidth in LTE. It may be understood that, for a value of *κ*, refer to related descriptions in section 4.1 in the protocol 38.211.

It may be understood that, that the length of the first CP is greater than the first value may be understood as that the quantity of sampling points corresponding to the first CP is greater than a quantity of sampling points corresponding to the first value. That is, when the index of the first OFDM symbol in the first subframe is 0 or 7 ∗ 2^{µ}, the quantity of sampling points corresponding to the first CP is greater than 144 ∗ 2^{-µ} + 16; or when the index of the first OFDM symbol in the first subframe is not 0 or 7 ∗ 2^{µ}, the quantity of sampling points corresponding to the first CP is greater than 144 ∗ 2^{-µ}.

For example, duration corresponding to the first value may be determined based on the value of the first value. For example, the duration corresponding to the first value is represented as a product of the value of the first value and Tc. That the length of the first CP is greater than the first value may be understood as that the duration of the first CP is greater than the duration corresponding to the first value. That is, when the index of the first OFDM symbol in the first subframe is 0 or 7 ∗ 2^{µ}, the duration of the first CP is greater than (144*κ* ∗ 2^{-µ} + 16*κ*) ∗ Tc; or when the index of the first OFDM symbol in the first subframe is not 0 or 7 ∗ 2^{µ}, the duration of the first CP is greater than 144*κ* ∗ 2^{-µ} ∗ Tc.

For example, the length of the second CP may be specified in a protocol. For example, when an index of the second OFDM symbol in the first subframe is 7 ∗ 2^{µ}, the duration of the second CP is equal to (144*κ* ∗ 2^{-µ} + 16*κ*) ∗ Tc; or when an index of the second OFDM symbol in the first subframe is not 0 or 7 ∗ 2^{µ}, the duration of the second CP is equal to 144*κ* ∗ 2^{-µ} ∗ Tc.

In some possible implementations, the length of the first CP corresponds to a delay spread of a first channel, the delay spread indicates a difference in transmission delay of the first slot between a first transmission path and a second transmission path in the first channel, and the first channel carries the first slot. When the first slot is transmitted through the first channel, the first slot may be transmitted through a plurality of transmission paths of the first channel. The first transmission path and the second transmission path are two different transmission paths in the plurality of transmission paths. The delay spread of the first channel is a difference in transmission delay of the first slot between the first transmission path and the second transmission path, that is, the delay spread of the first channel is a time difference of arrival between the first transmission path and the second transmission path.

In this implementation, the length of the first CP may be determined based on the delay spread of the first channel. For example, the length of the first CP is greater than or equal to the delay spread, so that the first OFDM symbol can be completely received within a corresponding FFT reception window, thereby avoiding signal loss and inter-symbol interference. As shown in FIG. 10, on the second transmission path, a portion of a signal in the first OFDM symbol is located after a first FFT reception window, but the portion of the signal is copied to the first CP. Therefore, the portion of the signal is not lost, that is, the first OFDM symbol transmitted on the second transmission path can be completely received within the first FFT reception window. In addition, no other OFDM symbol is received within the first FFT reception window, thereby avoiding inter-symbol interference.

For example, the first transmission path is a first arrival transmission path in the plurality of transmission paths of the first channel, the second transmission path is a last arrival transmission path in the plurality of transmission paths, and the delay spread may also be referred to as a maximum delay spread. The length of the first CP is greater than or equal to the maximum delay spread of the first channel, so that the first OFDM symbol can be completely received within the corresponding reception window, thereby avoiding signal loss and inter-symbol interference, improving demodulation performance, and enhancing coverage.

In a possible implementation, the length of the first CP is determined based on the delay spread and at least one of a modulation and coding scheme (modulation and coding scheme, MCS), a code rate, or a modulation scheme.

For example, different MCSs or modulation schemes correspond to different error vector magnitude (error vector magnitude, EVM) requirements. For example, in a high-order modulation scheme, a high MCS, or a high code rate, a smaller EVM indicator needs to be satisfied to ensure demodulation accuracy. In a low-order modulation scheme, a low MCS, or a low code rate, a large EVM may also satisfy demodulation accuracy. Impact of a loss of a portion of a received signal in a 1^{st} symbol under high-order modulation, a high MCS, or a high code rate on demodulation performance is greater than that under low-order modulation, a low MCS, or a low code rate. Therefore, after the length of the first CP is determined based on the delay spread of the channel, the length of the first CP may be further adjusted based on the modulation scheme, the MCS, or the code rate, to satisfy demodulation performance. For example, the length of the first CP is positively correlated with the MCS; the length of the first CP is positively correlated with a modulation order corresponding to the modulation scheme; or the length of the first CP is positively correlated with the code rate.

It may be understood that the MCS in this embodiment of this application may be an MCS index. A high MCS means a large MCS index.

902. The first communication apparatus sends the first slot, and correspondingly, a second communication apparatus receives the first slot.

In a possible implementation, an end position of the first OFDM symbol is the same as a start position of the second OFDM symbol, and a first symbol component in the first OFDM symbol is the same as a second symbol component in the second OFDM symbol, where an end position of the first symbol component is the end position of the first OFDM symbol, the second symbol component is located before a third symbol component in the second OFDM symbol, an end position of the third symbol component is the same as an end position of the second OFDM symbol, a length of the third symbol component is less than or equal to the length of the second CP, and the second CP is obtained based on the third symbol component.

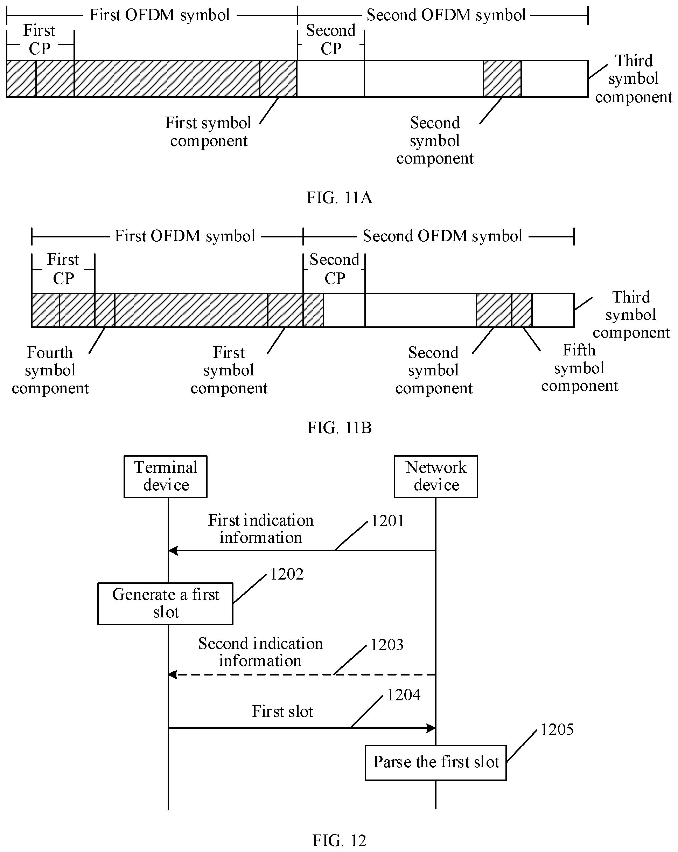

In an example, as shown in FIG. 11A, the second CP may be obtained by copying the third symbol component, that is, the second CP is the same as the third symbol component. The end position of the first OFDM symbol is the same as the start position of the second OFDM symbol, that is, the first OFDM symbol and the second OFDM symbol are contiguous in the time domain, and the first OFDM symbol is located before the second OFDM symbol. The end position of the first symbol component in the first OFDM symbol is the same as a start position of the second CP. Because the first symbol component is the same as the second symbol component, and the second CP is the same as the third symbol component, a symbol component including the first symbol component and the second CP is the same as a symbol component including the second symbol component and the third symbol component. Therefore, the symbol component including the first symbol component and the second CP may be considered as an equivalent CP of the second OFDM symbol, and a length of the equivalent CP of the second OFDM symbol is a sum of the length of the second CP and a length of the first symbol component.

In another example, as shown in FIG. 11B, a fourth symbol component in the first OFDM symbol is the same as a fifth symbol component in the second OFDM symbol, a start position of the fourth symbol component is the same as the end position of the first CP, an end position of the second symbol component is the same as a start position of the fifth symbol component, an end position of the fifth symbol component is the same as a start position of the third symbol component, and a sum of lengths of the fifth symbol component and the third symbol component is equal to the length of the second CP. In this example, the second CP is obtained by copying the fifth symbol component and the third symbol component. A symbol component including the first symbol component and the second CP is the same as a symbol component including the second symbol component, the fifth symbol component, and the third symbol component. Therefore, the symbol component including the first symbol component and the second CP may be used as an equivalent CP of the second OFDM symbol.

In this implementation, the first symbol component and the second CP may be understood as a CP of the second OFDM symbol, that is, the first symbol component and the second CP constitute the equivalent CP of the second OFDM symbol, thereby implementing equivalent extension of the CP of the second OFDM symbol. In this way, it can be ensured that the second OFDM symbol can be completely received within a reception window corresponding to the second OFDM symbol, so that signal loss is avoided, and a single-carrier signal has a stronger anti-ISI capability and a low adjacent channel leakage ratio (adjacent channel leakage ratio, ACLR)

In this embodiment of this application, that two symbol components are the same (for example, the first symbol component and the second symbol component, or the fourth symbol component and the fifth symbol component) may include: The two symbol components include same content, and the two symbol components have a same time length. That two symbol components include same content may be understood as that, before DFT is performed, modulation symbols respectively corresponding to the two symbol components are the same.

It may be understood that, in this embodiment of this application, that two symbol components are the same does not necessarily mean that the two symbol components are the same in an absolute sense, and may also indicate that the two symbol components are approximately the same. For example, due to a tailing effect of a filter, there may be a slight deviation between the two symbol components.

903. The second communication apparatus parses the first slot.

In a possible implementation, in a multi-transmission reception point (transmission reception point, TRP) scenario, the second communication apparatus receives a subframe from the first communication apparatus and a subframe from a third communication apparatus. In this scenario, the length of the first CP is greater than or equal to a first delay difference, the first delay difference is a difference between a first transmission delay and a second transmission delay, the first transmission delay is a transmission delay of a signal transmitted from the first communication apparatus to the second communication apparatus, and the second transmission delay is a transmission delay of a signal transmitted from the third communication apparatus to the second communication apparatus.

For example, the first communication apparatus may be a terminal device or a network device. When the first communication apparatus is a terminal device, the first communication apparatus may receive configuration information sent by a network device, where the configuration information is used to configure the length of the first CP. When the first communication apparatus is a network device, the first communication apparatus may determine the delay spread of the channel based on channel measurement, and determine the length of the first CP based on the delay spread of the channel.

In this embodiment of this application, the length of the first CP may be extended, that is, more signals may be copied from the tail of the first OFDM symbol to the front of the first OFDM symbol, so that the first OFDM symbol transmitted on each transmission path can fall within the corresponding FFT reception window, thereby reducing signal loss and improving demodulation performance.

It should be noted that the symbol or the OFDM symbol in embodiments of this application may be a DFT-s-OFDM symbol, an SC-QAM symbol, or another symbol. This is not limited in embodiments of this application.

FIG. 12 is an interaction diagram of a communication method according to an embodiment of this application. The method may be applied to the communication system shown in FIG. 1A or FIG. 1B, or the method may be applied to a terminal device or a network device. The terminal device may be the terminal device or the first communication apparatus described above, and the network device may be the network device or the second communication apparatus described above. As shown in FIG. 12, the method includes but is not limited to the following steps.

1201. A network device sends first indication information, and correspondingly, a terminal device receives the first indication information, where the first indication information indicates a length of a first CP.

As shown in FIG. 11A or FIG. 11B, in a possible implementation, for a plurality of OFDM symbols, carrying a PUSCH, in a first slot, a portion of a signal in a previous OFDM symbol may be copied to a next OFDM symbol in a cross-symbol manner, to construct an equivalent CP of the next OFDM symbol. For example, a portion of a signal in the first OFDM symbol is copied to the second OFDM symbol to construct an equivalent CP length of the second OFDM symbol, thereby implement equivalent extension of the length of the CP of the second OFDM symbol. A length of the equivalent CP is greater than the delay spread, so that ISI can be better combated. However, in this implementation, the equivalent CP takes effect from a 2^{nd} OFDM symbol among the plurality of OFDM symbols, and an equivalent CP of a 1^{st} OFDM symbol among the plurality of OFDM symbols cannot be constructed. Therefore, in this embodiment of this application, a length of a CP of the 1^{st} OFDM symbol (namely, the first OFDM symbol) in the plurality of OFDM symbols may be extended, to make the length of the CP of the first OFDM symbol greater than or equal to the delay spread, so that the first OFDM symbol can be completely received.

For example, the first CP is the CP of the first OFDM symbol, and the first OFDM symbol is a 1^{st} OFDM symbol among the plurality of OFDM symbols, carrying a PUSCH, in the first slot. The network device may indicate the length of the first CP by using the first indication information, to indicate the terminal device to extend the length of the CP of the first OFDM symbol. For example, the first indication information includes at least one of the following: a quantity of modulation symbols corresponding to an extension amount of the first CP, a quantity of sampling points corresponding to the extension amount of the first CP, a quantity of modulation symbols corresponding to the first CP, or a quantity of sampling points corresponding to the first CP. It may be understood that the extension amount of the first CP is a difference between a length of a first CP after extension and a length of the first CP before extension.

For example, the first indication information is carried in any one of the following: downlink control information, radio resource control signaling, a MAC CE, a system message SIB, or a PDSCH.

For example, before the network device sends the first indication information, the terminal device may report a terminal capability to the network device, for example, whether the terminal device supports an operation of extending a CP of a 1^{st} symbol, and a CP extension amount supported by the terminal device or a length of an extended CP. When the terminal device supports then operation of extending the CP of the 1^{st} symbol, the network device sends the first indication information. When the terminal device does not support the operation of extending the CP of the 1^{st} symbol, the network device does not send the first indication information.

It may be understood that, for specific descriptions of the first CP and the first OFDM symbol, refer to related descriptions in step 901 in FIG. 9. Details are not described herein again.

In a possible implementation, the network device may store a plurality of optional lengths of the first CP, and indicate one or more of the plurality of lengths of the first CP by using the first indication information. In this example, the network device may pre-configure the one or more lengths of the first CP for the terminal device, thereby improving configuration efficiency.

In a possible implementation, the network device determines the length of the first CP based on a delay spread of a first channel, where the first channel carries the first slot. When a delay spread of a channel is greater than the length of the first CP, a portion of a received signal in the first OFDM symbol is lost. In other words, the delay spread of the channel directly affects whether the received signal in the first OFDM symbol is complete. Therefore, the length of the first CP is directly related to the channel. In this example, the network device may first determine the channel that carries the first slot, and then configure the length of the first CP based on the delay spread of the channel. In this way, a loss of a portion of a received signal in the 1^{st} symbol on the channel may be directly avoided.

In another possible implementation, the network device determines the length of the first CP based on a delay spread of a channel and at least one of an MCS, a modulation scheme, or a code rate. For example, the network device may pre-configure the length of the first CP based on the delay spread of the channel, and then adjust the length of the first CP based on the MCS, the modulation scheme, the code rate, or the like.

In an example, the network device configures the length of the first CP or the extension amount of the first CP based on the MCS or the modulation scheme. For example, the network device may configure the length of the first CP or the extension amount of the first CP based on a mapping relationship between the length of the first CP or the extension amount of the first CP and the MCS, the modulation scheme, or the code rate; and the terminal device may determine the length of the first CP or the extension amount of the first CP based on the mapping relationship and an MCS, a modulation scheme, or a code rate corresponding to the first slot. The first indication information indicates the mapping relationship between the length of the first CP or the extension amount of the first CP and the MCS, the modulation scheme, or the code rate.

For example, Table 2 shows a mapping relationship between the MCS and the extension amount (ΔK) of the first CP. As shown in Table 2, the network device may pre-configure two extension amounts (a configuration 1 and a configuration 2) of the first CP, and then adjust the extension amounts of the first CP based on MCSs. For example, for an extension amount of the first CP in the configuration 1, when an index of the MCS corresponding to the first slot falls within a range 1, a value of the extension amount of the first CP falls within a range of (a1, b1); or when an index of the MCS corresponding to the first slot falls within a range 2, a value of the extension amount of the first CP falls within a range of (a2, b2).

**Table 2**

| MCS | ΔK (Configuration 1) | ΔK (Configuration 2) | ... |
|---|---|---|---|
| Range 1 | (a1 b1) | (c1 d1) | ... |
| Range 2 | (a2 b2) | (c2 d2) | ... |
| Range 3 | (a3 b3) | (c3 d3) | ... |
| ... | ... | ... | ... |

It may be understood that, in Table 2, a1, b1, a2, b2, and another similar value are merely used to indicate different value ranges of the extension amount of the first CP, and the range of (a1, b1) and the range of (a2, b2) may overlap or may not overlap. This is not limited in this application. A value range of the MCS may also be replaced with a specific value of the MCS, and a larger value of the MCS indicates a larger corresponding extension amount of the first CP. In other words, the length of the first CP is directly proportional to the MCS. For example, when the range 1 is (0, 3) and the range 2 is (4, 6), a1 is less than a2.

It may be understood that for a manner in which the network device configures the length of the first CP based on the mapping relationship between the length of the first CP and the MCS, refer to the manner in which the network device configures the extension amount of the first CP based on the mapping relationship between the length of the first CP and the MCS. Details are not described herein again.

In some possible implementations, the MCS shown in Table 2 may be replaced with a code rate corresponding to the MCS, and the length of the first CP is positively correlated with the code rate corresponding to the MCS. A larger code rate corresponds to a greater length of the first CP or a larger extension amount of the first CP.

Table 3 shows a mapping relationship between the modulation scheme and the extension amount (ΔK) of the first CP. As shown in Table 3, the network device may pre-configure two extension amounts (a configuration 1 and a configuration 2) of the first CP, and then adjust the extension amounts of the first CP based on modulation schemes. For example, for an extension amount of the first CP in the configuration 1, when the modulation scheme corresponding to the first slot is BPSK, a value of the extension amount of the first CP falls within a range of (e1, f1); or when the modulation scheme corresponding to the first slot is QPSK, a value of the extension amount of the first CP falls within a range of (e2, f2).

**Table 3**

| Modulation scheme | ΔK (Configuration 1) | ΔK (Configuration 2) | ... |
|---|---|---|---|
| BPSK | (e1 f1) | (g1 h1) | ... |
| QPSK | (e2 f2) | (g2 h2) | ... |
| 16QAM | (e3 f3) | (g3 h3) | ... |
| ... | ... | ... | ... |

It may be understood that, in Table 3, e1, f1, e2, f2, and another similar value are merely used to indicate different value ranges of the extension amount of the first CP, and the range of (e1, f1) and the range of (e2, f2) may overlap or may not overlap. This is not limited in this application. The modulation scheme in Table 3 may also be replaced with a modulation order corresponding to the modulation scheme, and a higher modulation order indicates a larger corresponding extension amount of the first CP. In other words, the length of the first CP is directly proportional to the modulation order.

It may be understood that for a manner in which the network device configures the length of the first CP based on the mapping relationship between the length of the first CP and the modulation scheme, refer to the manner in which the network device configures the extension amount of the first CP based on the mapping relationship between the length of the first CP and the modulation scheme.

It may be understood that Table 2 and Table 3 are merely configuration manners of the extension amount of the first CP provided in this embodiment of this application, and the mapping relationship between the MCS or the modulation scheme and the extension amount of the first CP shown in Table 2 or Table 3 should not be understood as a limitation on this embodiment of this application.

In this example, the network device configures the mapping relationship between the MCS, the modulation scheme, or the code rate and the extension amount of the first CP or the length of the first CP, so that the terminal device determines the length of the first CP based on the mapping relationship and the MCS, the modulation scheme, or the code rate corresponding to the first slot, to satisfy an EVM requirement and ensure demodulation accuracy.

In another example, the network device configures the length of the first CP or the extension amount of the first CP based on a reference MCS, a reference modulation scheme, or a reference code rate. For example, the network device may indicate, by using the first indication information, a length or an extension amount of a CP of a 1^{st} symbol corresponding to the reference MCS, the reference modulation scheme, or the reference code rate. The terminal device adaptively adjusts the length of the first CP based on the length of the CP corresponding to the reference MCS, the reference modulation scheme, or the reference code rate. For example, when an MCS corresponding to the first slot is higher than the reference MCS, the length of the first CP is greater than the length of the CP of the 1^{st} symbol corresponding to the reference MCS. For another example, when an MCS corresponding to the first slot is lower than the reference MCS, the length of the first CP is less than the length of the CP of the 1^{st} symbol corresponding to the reference MCS. For another example, when a modulation order of a modulation scheme corresponding to the first slot is lower than a modulation order of the reference modulation scheme, the length of the first CP is less than the length of the CP of the 1^{st} symbol corresponding to the reference modulation scheme. For another example, when a code rate corresponding to the first slot is lower than the reference code rate, the length of the first CP is less than the length of the CP of the 1^{st} symbol corresponding to the reference code rate.

For example, as shown in Table 4, the reference MCS configured by the network device is m1. In a configuration 1, a value range of the extension amount of the CP of the 1^{st} symbol corresponding to the reference MCS is (a1, b1). When the MCS corresponding to the first slot is lower than m1, a value range of the extension amount of the first CP is (y1, z1), where y1 is less than a1, and z1 is less than b1.

**Table 4**

| Reference MCS | ΔK (Configuration 1) | ΔK (Configuration 2) | ... |
|---|---|---|---|
| m1 | (a1 b1) | (c1 d1) | ... |

In some possible implementations, the reference MCS in Table 4 may also be replaced with a code rate corresponding to the reference MCS.

As shown in Table 5, the reference modulation scheme configured by the network device is QPSK. In a configuration 1, a value range of the extension amount of the CP of the 1^{st} symbol corresponding to QPSK is (e2, f2). When the modulation order of the modulation scheme corresponding to the first slot is lower than that of QPSK, a value range of the extension amount of the first CP is (y2, z2), where y2 is less than e2, and z2 is less than f2.

**Table 5**

| Reference modulation scheme | ΔK (Configuration 1) | ΔK (Configuration 2) | ... |
|---|---|---|---|
| QPSK | (e2 f2) | (g2 h2) | ... |

In this example, the network device may configure a mapping relationship between the reference MCS or the reference modulation scheme and the extension amount of the first CP, so that the terminal device can adaptively adjust the extension amount of the first CP or the length of the first CP by comparing the reference MCS with the MCS corresponding to the first slot, to satisfy an EVM requirement and ensure demodulation accuracy.

It may be understood that the value range of the extension amount in Table 2, Table 3, Table 4, or Table 5 may also be replaced with a specific value of the extension amount, and the extension amount of the first CP may also be replaced with the length of the first CP. The extension amount of the first CP or the length of the first CP may be represented by using a corresponding quantity of modulation symbols or a corresponding quantity of sampling points. The mapping relationship between the MCS or the modulation scheme and the extension amount of the CP shown in Table 2, Table 3, Table 4, or Table 5 is merely an example, and the mapping relationship shown in Table 2, Table 3, Table 4, or Table 5 should not be understood as a limitation on this application.

1202. The terminal device generates the first slot.

It may be understood that, for a specific implementation of step 1202, refer to the specific implementation of step 901 in FIG. 9. Details are not described herein again.

In a possible implementation, the method shown in FIG. 12 further includes step 1203.

1203. The network device sends second indication information, and correspondingly, the terminal device receives the second indication information.

For example, the first slot is included in a first subframe, and the network device may indicate, by using the second indication information, time at which the terminal device sends the first subframe, to ensure uplink timing synchronization between the terminal device and the network device. For example, the first slot is a 1^{st} slot in the first subframe. The second indication information includes at least one of the following: a first TA, a start time of the first CP, or a second difference. The first TA indicates a timing advance of a start time of the first subframe relative to an arrival time of a downlink subframe, the second difference is a difference between the start time of the first CP and a start time of a sixth symbol component in the first OFDM symbol, an end position of the sixth symbol component is an end position of the first CP, and a length of the sixth symbol component is greater than or equal to a length of a second CP. The first TA indicates a TA corresponding to the first subframe after the first CP is extended. The length of the sixth symbol component is equal to the length of the first CP before extension. The start time of the sixth symbol component may be understood as a CP start time before the first CP is extended. Therefore, the start time of the first CP may be indicated by indicating the second difference. When an index of the first OFDM symbol in the first subframe is 0 or 7*2^{µ}, the length of the sixth symbol component is greater than the length of the second CP, and a difference between the length of the sixth symbol component and the length of the second CP is 16κ. When the index of the first OFDM symbol in the first subframe is not 0 or 7*2^{µ}, the length of the sixth symbol component is equal to the length of the second CP.

For example, the second indication information is carried in any one of the following: downlink control information, radio resource control signaling, a media access control MAC control element CE, a system message SIB, or a physical downlink shared channel PDSCH.

For example, when the second indication information indicates the first TA, the second indication information includes at least one of the following of the first TA: a quantity of sampling points corresponding to the first TA, a quantity of modulation symbols corresponding to the first TA, duration corresponding to the first TA, or a quantity *N_{TA}* of unit time corresponding to the first TA. For a correspondence between N_{TA} and the first TA, refer to Formula (3). The first TA is determined based on a first difference or the length of the first CP, and the first difference is a difference between the length of the first CP and the length of the second CP. Alternatively, the first TA is determined based on the length of the first CP, or determined based on the extension amount of the first CP. The extension amount of the first CP may be represented by using the first difference. For example, when the index of the first OFDM symbol in the first subframe is not 0 or 7*2^{µ}, the extension amount of the first CP is equal to the first difference. When the index of the first OFDM symbol in the first subframe is 0 or 7*2^{µ}, the extension amount of the first CP is equal to a difference between the first difference and 16κ.

In an example, the network device pre-configures a plurality of TAs, and indicates one of the plurality of TAs by using the second indication information.

In another example, the network device may determine the first TA based on the length of the first CP or the extension amount of the first CP, and indicate the first TA by using the second indication information.

For example, the network device may indicate the first TA by configuring a mapping relationship between the length of the first CP or the extension amount of the first CP and the first TA. For example, Table 6 shows a mapping relationship between the extension amount of the first CP and the first TA. As shown in Table 6, when the extension amount of the first CP falls within (a1, b1), a value range of the first TA is (i1, j1).

**Table 6**

| Extension amount of the first CP | First TA |
|---|---|
| (a1 b1) | (i1 j1) |
| (a2 b2) | (i2 j2) |
| ... | ... |

It may be understood that, in Table 6, a1 and b1, a2 and b2, i1 and j1, and i2 and j2 may be respectively equal or may not be equal. That is, one value range of the extension amount of the first CP corresponds to one value range of the first TA or one specific value of the first TA, or one specific value of the extension amount of the first CP may correspond to one value range of the first TA or one specific value of the extension amount of the first CP. The extension amount of the first CP may also be replaced with the length of the first CP. The extension amount of the first CP may be represented by using the quantity of modulation symbols or the quantity of sampling points corresponding to the extension amount of the first CP, and the length of the first CP may be determined based on the quantity of modulation symbols or the quantity of sampling points corresponding to the first CP. The first TA may be the quantity of sampling points, the quantity of modulation symbols, the duration, or the quantity *N_{TA}* of unit time that corresponds to the first TA.

For example, the network device may configure a mapping relationship between the extension amount of the first CP and the first TA for the terminal device by using the second indication information, or the network device may determine, based on the mapping relationship, a first TA after the first CP is extended, and indicate the first TA by using the second indication information.

In still another example, the network device may determine the first TA based on the length of the first CP or the extension amount of the first CP and the first channel.

For example, the network device may determine the value range of the first TA based on the length of the first CP or the extension amount of the first CP and the first channel. The network device may indicate the value range of the first TA by using the second indication information, or may determine a value of the first TA from the value range of the first TA, and indicate the value of the first TA by using the second indication information.

1204. The terminal device sends the first slot, and correspondingly, the network device receives the first slot.

For example, the terminal device may determine sending time of the first slot or the first subframe based on the second indication information.

1205. The network device parses the first slot.

It may be understood that, for specific implementations of step 1204 and step 1205, refer to the specific implementations of step 902 and step 903 in FIG. 9. Details are not described herein again.

In this embodiment of this application, the length of the first CP may be extended, that is, more signals may be copied from the tail of the first OFDM symbol to the front of the first OFDM symbol, so that the first OFDM symbol transmitted on each transmission path can fall within the corresponding FFT reception window, thereby reducing signal loss and improving demodulation performance. In addition, when the length of the CP of the first OFDM symbol changes, the network device may indicate, by using the second indication information, the time at which the terminal device sends the first subframe, to ensure uplink timing synchronization between the terminal device and the network device.

In this embodiment of this application, information such as the length of the first CP, the extension amount of the first CP, and the first TA may also be specified in a protocol. In this case, the network device does not need to send the first indication information and the second indication information to the terminal device.

For the start time of the first subframe, this embodiment of this application further provides the following several examples:
Example 1: The start time of the first subframe is the start time of the sixth symbol component.

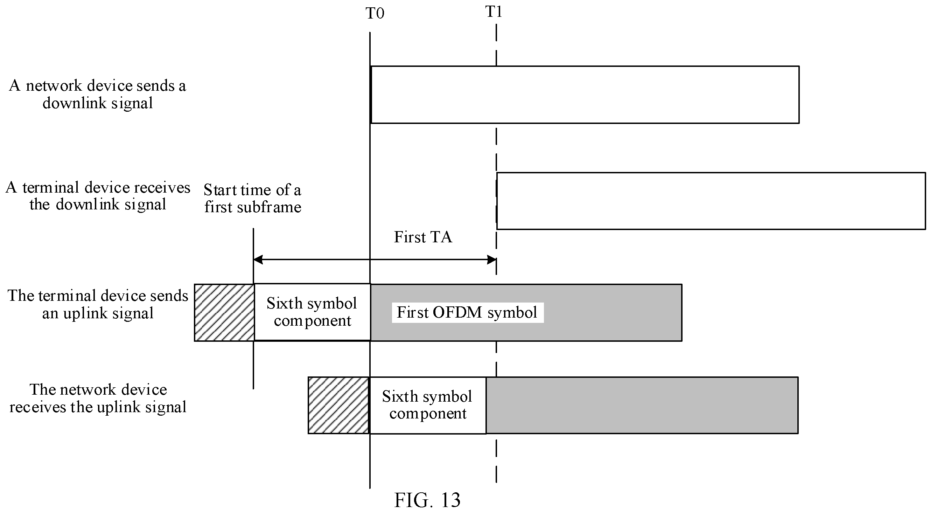

In this example, the first slot is a 1^{st} slot of the first subframe, that is, the first OFDM symbol is a 1^{st} OFDM symbol of the first subframe. The sixth symbol component is a CP before the first CP is extended, and a start time of a subframe before the first CP is extended is used as a start time of the subframe after the first CP is extended. That is, a start time of a subframe in a case of CP extension is the same as a start time of the subframe in the case of CP extension, as shown in FIG. 13.

For example, before the CP of the first OFDM symbol is extended, a continuous-time signal ${s}_{l}^{\left(p, μ\right)} \left(t\right)$ corresponding to the first OFDM symbol satisfies: ${s}_{l}^{\left(p, μ\right)} \left(t\right) = \left\{\begin{matrix}{\overline{s}}_{l}^{\left(p, μ\right)} \left(t\right) & {t}_{start , 1}^{μ} \leq t < {t}_{start , 1}^{μ} + {T}_{symb , 1}^{μ} \\ 0 & otherwise\end{matrix}\right.$ ${\overline{s}}_{l}^{\left(p, μ\right)} \left(t\right) = {\sum }_{k = 0}^{{N}_{grid , x}^{size , μ} {N}_{sc}^{RB} - 1} {a}_{k , l}^{\left(p, μ\right)} {e}^{j 2 π \left(k+{k}_{0}^{μ}-{N}_{grid , x}^{size , μ}{N}_{sc}^{RB}/2\right) Δf \left(t-{N}_{CP , 1}^{μ}{T}_{c}-{t}_{start , 1}^{μ}\right)}$ ${k}_{0}^{μ} = \left({N}_{grid , x}^{start , μ}+{N}_{grid , x}^{size , μ}/2\right) {N}_{sc}^{RB} - \left({N}_{grid , x}^{start , {μ}_{0}}+{N}_{grid , x}^{size , {μ}_{0}}/2\right) {N}_{sc}^{RB} {2}^{{μ}_{0} - μ}$ ${T}_{symb , 1}^{μ} = \left({N}_{u}^{μ}+{N}_{CP , 1}^{μ}\right) {T}_{c}$

p represents an antenna port, µ represents a subcarrier spacing configuration, 1 represents the index of the first OFDM symbol in the first subframe, a value range of 1 is: $l ∈ \left\{0,1,…,{N}_{slot}^{subframe , μ}{N}_{symb}^{slot}-1\right\} , { N}_{slot}^{subframe , μ}$ represents a quantity of slots in the first subframe, ${N}_{symb}^{slot}$ represents a quantity of symbols in the first slot, ${t}_{start , 1}^{μ}$ represents a start time of the first OFDM symbol, ${T}_{symb , 1}^{μ}$ represents duration of the first OFDM symbol, ${N}_{grid , x}^{size , μ}$ represents a size of a resource grid, ${N}_{sc}^{RB}$ represents a quantity of subcarriers of each resource block, ${N}_{CP , 1}^{μ}$ represents a length of a cyclic prefix, Δf represents a subcarrier spacing, µ₀ represents a maximum subcarrier spacing configuration, ${N}_{grid , x}^{start , {μ}_{0}}$ represents a start index of a resource grid, and ${N}_{u}^{μ}$ represents a length of a data symbol.

In a case of CP expansion (that is, CP extension) of the first OFDM symbol 1, a continuous-time signal ${s}_{ext}^{\left(p, μ\right)} \left(t\right)$ at an interval ${t}_{start , 1}^{μ} - {T}_{ext} \leq t < {t}_{start , 1}^{μ}$ before the first OFDM symbol satisfies the following formula: ${s}_{ext}^{\left(p, μ\right)} \left(t\right) = {\overline{s}}_{l}^{\left(p, μ\right)} \left(t\right)$

t < 0 represents a signal in a previous subframe, and Tₑₓₜ represents the extension amount of the first CP.

A start position of the first OFDM symbol in the subcarrier spacing configuration µ is: ${t}_{start , l}^{μ} = \left\{\begin{matrix}0 & l = 0 \\ {t}_{start , l - 1}^{μ} + \left({N}_{u}^{μ}+{N}_{CP , l - 1}^{μ}\right) ⋅ {T}_{c} & otherwise\end{matrix}\right.$

It can be learned from the foregoing that, when the first OFDM symbol is the 1^{st} OFDM symbol of the first subframe, the start time of the first subframe when the first CP is extended is the same as the start time of the first subframe when the first CP is not extended, that is, t = 0 is used as the start time of the subframe.

In this example, the value range of the first TA includes (TA2-CP1+ΔT, TA2). CP1 is the length of the first CP, ΔT is the delay spread of the first channel, TA2 is a TA corresponding to a second subframe, the second subframe includes a second slot, a length of a CP of a third OFDM symbol in the second slot is less than the length of the first CP and is greater than or equal to a length of a CP of another OFDM symbol in the second slot, and the third OFDM symbol is a 1^{st} OFDM symbol among a plurality of OFDM symbols used to carry a PUSCH or a PDSCH in the second slot. The second subframe may be understood as a first subframe before the CP of the first OFDM symbol is extended, the third OFDM symbol may be understood as a first OFDM symbol before the first CP is extended, and the second TA may be understood as a TA corresponding to the first subframe before the first CP is extended.

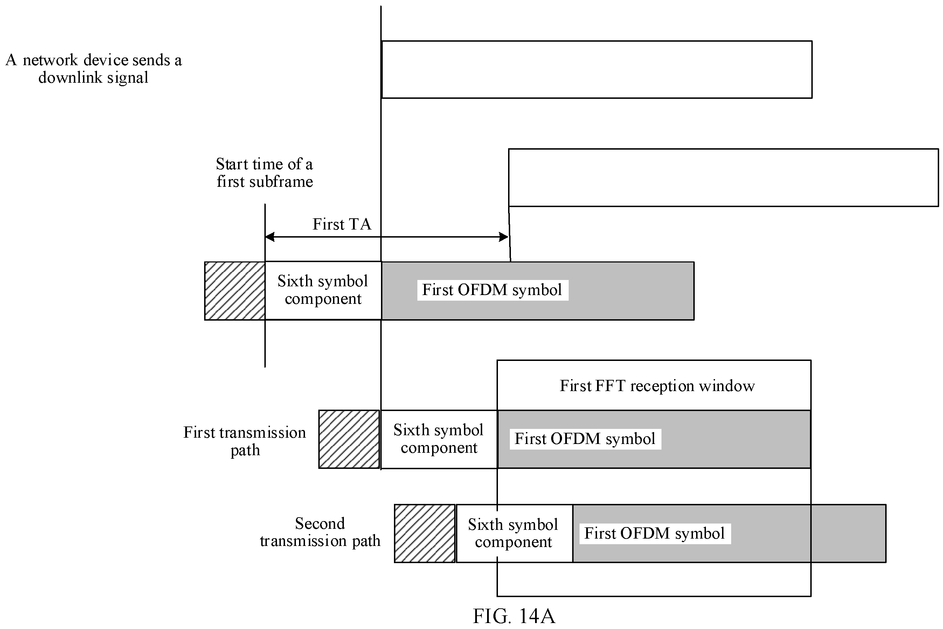

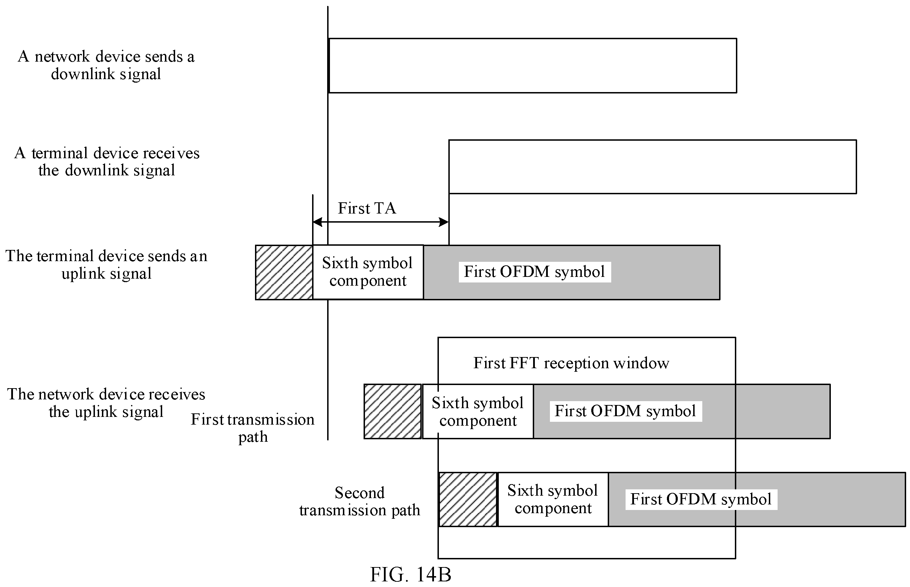

For example, when the first TA is set to a maximum value, a data symbol in the first OFDM symbol on a first transmission path (that is, a path on which a transmission arrives first) needs to be completely received within a first FFT reception window. As shown in FIG. 14A, the maximum value of the first TA may be equal to the second TA. When the first TA is set to a minimum value, a data symbol in the first OFDM symbol on a second transmission path (that is, a path on which a transmission arrives last) needs to be completely received within the first FFT reception window. As shown in FIG. 14B, the minimum value of the first TA may be less than the second TA. The minimum value of the first TA may be determined based on the delay spread of the first channel and the length of the first CP. For example, the minimum value of the first TA may be TA2-CP1+ΔT.

Example 2: The start time of the first subframe is the start time of the first CP.

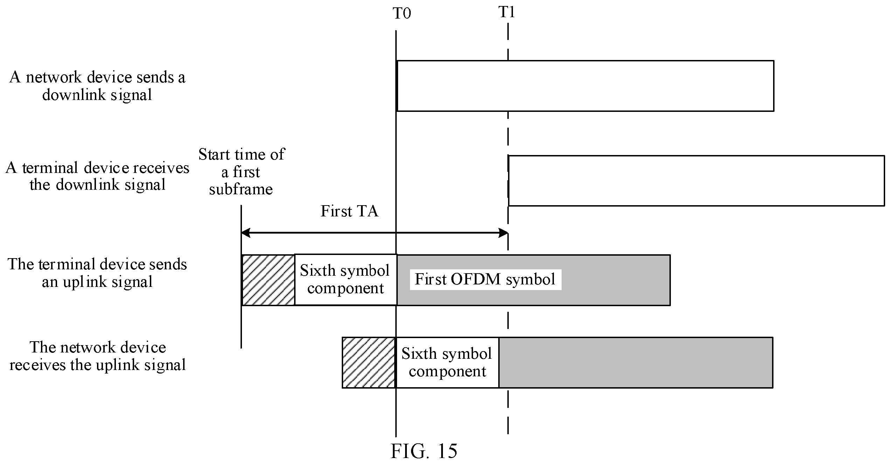

In this example, the TA is a difference between the start time of the first subframe and the arrival time of the downlink subframe. As shown in FIG. 15, because the length of the first CP is increased, and the start time of the first subframe is moved forward, a TA after the first CP is extended is greater than a TA before the first CP is extended.

For example, the value range of the first TA includes (TA2-CP1+ΔT + ΔD, TA2+ΔD), where CP1 is the length of the first CP, ΔT is the delay spread of the first channel, ΔD is the first difference or the extension amount of the first CP, TA2 is a TA corresponding to a second subframe, the second subframe includes a second slot, a length of a CP of a third OFDM symbol in the second slot is less than the length of the first CP and is greater than or equal to a length of a CP of another OFDM symbol in the second slot, and the third OFDM symbol is a 1^{st} OFDM symbol among a plurality of OFDM symbols used to carry a PUSCH or a PDSCH in the second slot. The second subframe may be understood as a first subframe before the CP of the first OFDM symbol is extended, the third OFDM symbol may be understood as a first OFDM symbol before the first CP is extended, and the second TA may be understood as a TA corresponding to the first subframe before the first CP is extended.

For example, the length of the CP of the first OFDM symbol is related to the index of the first OFDM symbol in the first subframe. When the index of the first OFDM symbol in the first subframe is 0, ΔD is (the first difference-16κ); or when the index of the first OFDM symbol in the first subframe is not 0, ΔD is the first difference.

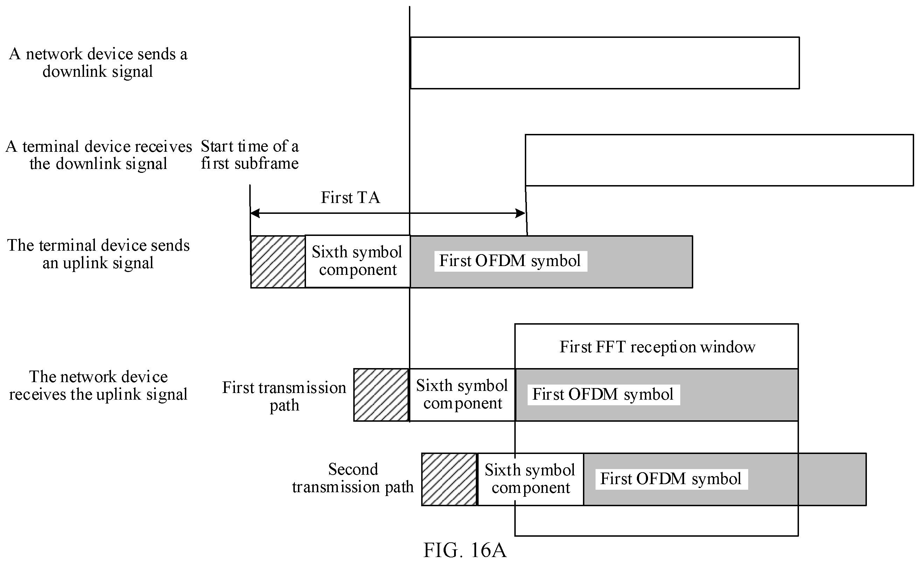

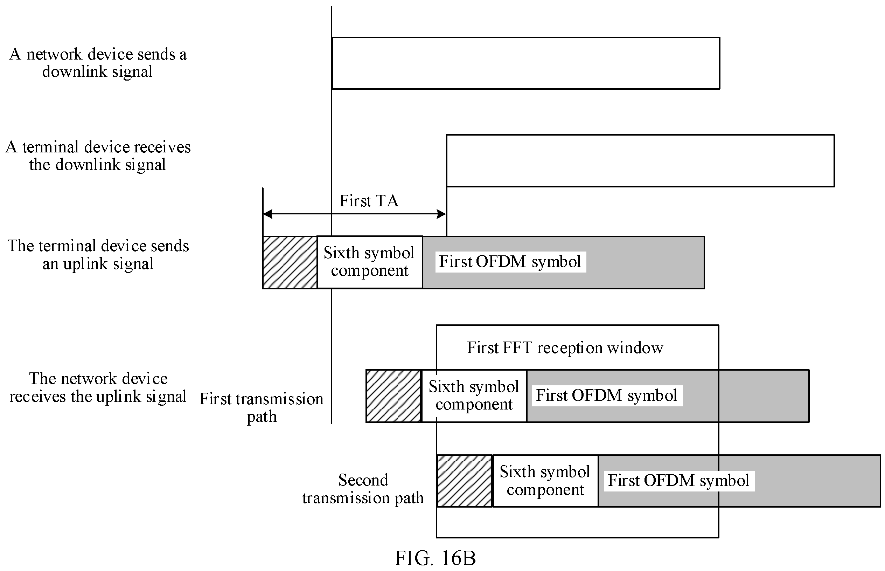

For example, as shown in FIG. 16A, when the first TA is set to the maximum value, the data symbol in the first OFDM symbol on the first transmission path needs to be completely received within the first FFT reception window, and the maximum value of the first TA is obtained by adding the extension amount of the first CP to the second TA. As shown in FIG. 16B, when the first TA is set to the minimum value, the data symbol in the first OFDM symbol on the second transmission path needs to be completely received within the first FFT reception window. The minimum value of the first TA may be TA2 - ΔTA, TA2 is the second TA, and ΔTA is determined based on the first CP, the delay spread, and the extension amount of the first CP. For example, ΔTA is CP1-ΔT - ΔD.

In this embodiment of this application, the value range of the first TA may be determined based on the second TA, the length of the first CP, the first difference, and the delay spread, so that when the first TA is set to the maximum value, the data symbol in the first OFDM symbol on the first transmission path (that is, the path on which a transmission arrives first) can be exactly received within the first FFT reception window, and when the first TA is set to the minimum value, the data symbol in the first OFDM symbol on the second transmission path (that is, the path on which a transmission arrives last) can be exactly received within the first FFT reception window, thereby ensuring that the first OFDM symbols on the plurality of transmission paths of the channel can be completely received within the first FFT reception window, and avoiding signal loss.

The following describes apparatuses provided in embodiments of this application.

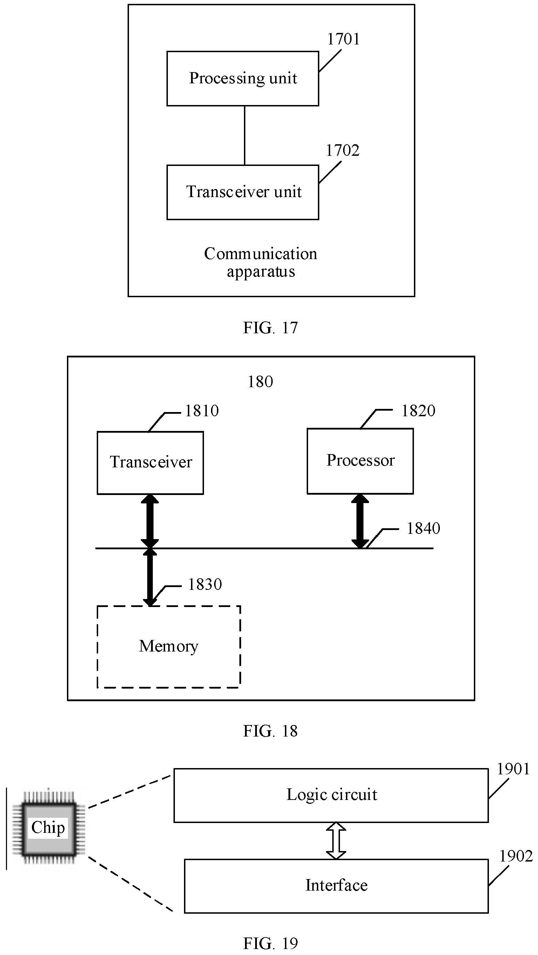

In this application, the communication apparatus is divided into functional modules based on the foregoing method embodiments. For example, each functional module may be obtained through division based on each corresponding function, or two or more functions may be integrated into one processing module. The integrated module may be implemented in a form of hardware, or may be implemented in a form of a software functional module. It should be noted that, in this application, module division is an example, and is merely logical function division. In actual implementation, another division manner may be used. The following describes in detail communication apparatuses in embodiments of this application with reference to FIG. 17 to FIG. 19.

FIG. 17 is a diagram of a structure of a communication apparatus according to an embodiment of this application. As shown in FIG. 17, the communication apparatus includes a processing unit 1701 and a transceiver unit 1702. The transceiver unit 1702 may implement a corresponding communication function, and the processing unit 1701 is configured to perform data processing. For example, the transceiver unit 1702 may also be referred to as a communication interface, a communication unit, or the like.

In some embodiments of this application, the communication apparatus may be configured to perform an action performed by the first communication apparatus or the terminal device in the foregoing method embodiments. In this case, the communication apparatus may be the first communication apparatus or the terminal device, or the communication apparatus may be a component (for example, a chip or a system) that may be configured in the first communication apparatus or the terminal device. The transceiver unit 1702 is configured to perform a sending/receiving-related operation of the first communication apparatus or the terminal device in the foregoing method embodiments, and the processing unit 1701 is configured to perform a processing-related operation of the first communication apparatus or the terminal device in the foregoing method embodiments.

For example, the processing unit 1701 generates a first slot, and the transceiver unit 1702 is configured to send the first slot.

Optionally, the processing unit 1701 is further configured to determine a length of a first CP based on a delay spread.

Optionally, the transceiver unit 1702 is further configured to receive first indication information.

Optionally, the transceiver unit 1702 is further configured to receive second indication information.

It may be understood that for specific descriptions of the first slot, the delay spread, the first CP, the first indication information, the second indication information, and the like, refer to the foregoing method embodiments, and details are not described herein again.

In some other embodiments of this application, the communication apparatus may be configured to perform an action performed by the second communication apparatus or the network device in the foregoing method embodiments. In this case, the communication apparatus may be the second communication apparatus or the network device, or the communication apparatus may be a component (for example, a chip or a system) that may be configured in the second communication apparatus or the network device. The transceiver unit 1702 is configured to perform a sending/receiving-related operation of the second communication apparatus or the network device in the foregoing method embodiments, and the processing unit 1701 is configured to perform a processing-related operation of the second communication apparatus or the network device in the foregoing method embodiments.

For example, the transceiver unit 1702 is configured to receive a first slot, and the processing unit 1701 is configured to parse the first slot.

Optionally, the transceiver unit 1702 is further configured to send first indication information.

Optionally, the transceiver unit 1702 is further configured to send second indication information.

It may be understood that for specific descriptions of the first slot, the first indication information, the second indication information, and the like, refer to the foregoing method embodiments, and details are not described herein again.

Optionally, the communication apparatus may further include a storage unit. The storage unit may be configured to store instructions and/or data. The processing unit 1701 may read the instructions and/or the data in the storage unit, to cause the communication apparatus to implement the foregoing method embodiments.

It may be understood that the specific descriptions of the transceiver unit and the processing unit in this embodiment of this application are merely examples. For specific functions, steps, or the like performed by the transceiver unit and the processing unit, refer to the foregoing method embodiments. Details are not described herein again.

The foregoing describes the communication apparatus in embodiments of this application. The following describes possible product forms of the communication apparatus. It should be understood that a product in any form that has functions of the communication apparatus in FIG. 17 falls within the protection scope of embodiments of this application. It should be further understood that the following descriptions are merely examples, and do not limit a product form of the communication apparatus in embodiments of this application.

In a possible implementation, in the communication apparatus shown in FIG. 17, the processing unit 1701 may be one or more processors; and the transceiver unit 1702 may be a transceiver, or the transceiver unit 1702 may be a sending unit and a receiving unit. The sending unit may be a transmitter, the receiving unit may be a receiver, and the sending unit and the receiving unit are integrated into one device, for example, a transceiver. In embodiments of this application, the processor and the transceiver may be coupled, or the like. A connection manner of the processor and the transceiver is not limited in embodiments of this application. In a process of performing the foregoing method, a process of sending information in the foregoing method may be understood as a process of outputting the information by the processor. When outputting the information, the processor outputs the information to a transceiver, so that the transceiver transmits the information. After the information is output by the processor, other processing may further need to be performed on the information before the information arrives at the transceiver. Similarly, a process of receiving information in the foregoing method may be understood as a process of receiving the input information by the processor. When the processor receives the input information, the transceiver receives the information, and inputs the information to the processor. Further, after the transceiver receives the information, other processing may need to be performed on the information before the processor receives the information.

As shown in FIG. 18, a communication apparatus 180 includes one or more processors 1820 and a transceiver 1810.

In some embodiments of this application, the communication apparatus may be configured to perform steps, functions, or the like performed by the first communication apparatus or the terminal device in the foregoing method embodiments.

For example, the processor 1820 is configured to generate a first slot, and the transceiver 1810 is configured to send the first slot.

Optionally, the transceiver 1810 is further configured to receive first indication information.

Optionally, the transceiver 1810 is further configured to receive second indication information.

Optionally, the processor 1820 is further configured to determine a length of a first CP based on a delay spread.

In some other embodiments of this application, the communication apparatus may be configured to perform steps, functions, or the like performed by the second communication apparatus or the network device in the foregoing method embodiments.

For example, the transceiver 1810 is configured to receive a first slot, and the processor 1820 is configured to parse the first slot.

Optionally, the transceiver 1810 is further configured to send first indication information.

Optionally, the transceiver 1810 is further configured to send second indication information.

It may be understood that the specific descriptions of the transceiver and the processor in this embodiment of this application are merely examples. For specific functions, steps, or the like performed by the transceiver and the processor, refer to the foregoing method embodiments. Details are not described herein again.

In the foregoing embodiments, for descriptions of the first slot, the delay spread, the first CP, the first indication information, the second indication information, and the like, refer to the descriptions in the foregoing method embodiments. Details are not described herein again.

In various implementations of the communication apparatus shown in FIG. 18, the transceiver may include a receiver and a transmitter. The receiver is configured to perform a receiving function (or operation), and the transmitter is configured to perform a transmitting function (or operation). The transceiver is configured to communicate with another device/apparatus through a transmission medium.

Optionally, the communication apparatus 180 may further include one or more memories 1830, configured to store program instructions, data, and/or the like. The memory 1830 is coupled to the processor 1820. The coupling in this embodiment of this application may be an indirect coupling or a communication connection between apparatuses, units, or modules in an electrical form, a mechanical form, or another form, and is used for information exchange between the apparatuses, the units, or the modules. The processor 1820 may cooperate with the memory 1830. The processor 1820 may execute the program instructions stored in the memory 1830. Optionally, at least one of the one or more memories may be included in the processor.

A specific connection medium between the transceiver 1810, the processor 1820, and the memory 1830 is not limited in embodiments of this application. In this embodiment of this application, the memory 1830, the processor 1820, and the transceiver 1810 are connected to each other through a bus 1840 in FIG. 18. The bus is represented by a bold line in FIG. 18. A connection manner of other components is merely an example for illustrative description, but is not limited thereto. The bus may be classified into an address bus, a data bus, a control bus, and the like. For ease of representation, only one bold line is used to represent the bus in FIG. 18, but this does not mean that there is only one bus or only one type of bus.

In this embodiment of this application, the processor may be a general-purpose processor, a digital signal processor, an application-specific integrated circuit, a field programmable gate array or another programmable logic device, a discrete gate or transistor logic device, a discrete hardware component, or the like. The processor can implement or execute the methods, the steps, and the logical block diagrams disclosed in embodiments of this application. The general-purpose processor may be a microprocessor, any conventional processor, or the like. The steps of the methods disclosed in combination with embodiments of this application may be directly implemented by a hardware processor, or may be implemented by using a combination of hardware and software modules in the processor, or the like.

In this embodiment of this application, the memory may include but is not limited to a non-volatile memory like a hard disk drive (hard disk drive, HDD) or a solid-state drive (solid-state drive, SSD), a random access memory (Random Access Memory, RAM), an erasable programmable read-only memory (Erasable Programmable ROM, EPROM), a read-only memory (Read-Only Memory, ROM), a portable read-only memory (Compact Disc Read-Only Memory, CD-ROM), or the like. The memory is any storage medium that can be used to carry or store program code in a form of an instruction or a data structure and that can be read and/or written by a computer (for example, the communication apparatus shown in this application). However, this application is not limited thereto. The memory in embodiments of this application may alternatively be a circuit or any other apparatus that can implement a storage function, and is configured to store the program instructions and/or the data.

For example, the processor 1820 is mainly configured to: process a communication protocol and communication data, control the entire communication apparatus, execute a software program, and process data of the software program. The memory 1830 is mainly configured to store the software program and the data. The transceiver 1810 may include a control circuit and an antenna. The control circuit is mainly configured to: perform conversion between a baseband signal and a radio frequency signal, and process the radio frequency signal. The antenna is mainly configured to receive and send a radio frequency signal in a form of an electromagnetic wave. An input/output apparatus, for example, a touchscreen, a display, or a keyboard, is mainly configured to: receive data input by a user and output data to the user.

After the communication apparatus is powered on, the processor 1820 may read the software program in the memory 1830, interpret and execute instructions of the software program, and process the data of the software program. When data needs to be sent wirelessly, the processor 1820 performs baseband processing on the to-be-sent data, and then outputs a baseband signal to a radio frequency circuit. The radio frequency circuit performs radio frequency processing on the baseband signal, and then sends, through the antenna, a radio frequency signal in a form of an electromagnetic wave. When data is sent to the communication apparatus, the radio frequency circuit receives a radio frequency signal through the antenna, converts the radio frequency signal into a baseband signal, and outputs the baseband signal to the processor 1820. The processor 1820 converts the baseband signal into data, and processes the data.

In another implementation, the radio frequency circuit and the antenna may be disposed independent of the processor that performs baseband processing. For example, in a distributed scenario, the radio frequency circuit and the antenna may be disposed remotely and independent of the communication apparatus.

It may be understood that the communication apparatus shown in this embodiment of this application may alternatively include more components than those in FIG. 18, or the like. This is not limited in embodiments of this application. The methods performed by the processor and the transceiver are merely examples. For specific steps performed by the processor and the transceiver, refer to the methods described above.

In another possible implementation, in the communication apparatus shown in FIG. 17, the processing unit 1701 may be one or more logic circuits, and the transceiver unit 1702 may be an input/output interface, or may be referred to as a communication interface, an interface circuit, an interface, or the like. Alternatively, the transceiver unit 1702 may include a sending unit and a receiving unit. The sending unit may be an output interface, and the receiving unit may be an input interface. The sending unit and the receiving unit are integrated into one unit, for example, an input/output interface. As shown in FIG. 19, a communication apparatus shown in FIG. 19 includes a logic circuit 1901 and an interface 1902. In other words, the processing unit 1701 may be implemented by using the logic circuit 1901, and the transceiver unit 1702 may be implemented by using the interface 1902. The logic circuit 1901 may be a chip, a processing circuit, an integrated circuit, a system on chip (system on chip, SoC) chip, or the like. The interface 1902 may be a communication interface, an input/output interface, a pin, or the like. For example, FIG. 19 shows an example in which the communication apparatus is a chip. The chip includes the logic circuit 1901 and the interface 1902.

In this embodiment of this application, the logic circuit and the interface may alternatively be coupled to each other. A specific connection manner of the logic circuit and the interface is not limited in embodiments of this application.

In some embodiments of this application, the communication apparatus may be configured to perform steps, functions, or the like performed by the first communication apparatus or the terminal device in the foregoing method embodiments. For example, the logic circuit 1901 is configured to generate a first slot, and the interface 1902 is configured to output the first slot. Optionally, the logic circuit 1901 is further configured to determine a length of a first CP. Optionally, the interface 1902 is further configured to receive first indication information. Optionally, the interface 1902 is further configured to receive second indication information.

In some other embodiments of this application, the communication apparatus may be configured to perform steps, functions, or the like performed by the second communication apparatus or the network device in the foregoing method embodiments. For example, the interface 1902 is configured to input a first slot, and the logic circuit 1901 is configured to parse the first slot. Optionally, the interface 1902 is further configured to send first indication information. Optionally, the interface 1902 is further configured to send second indication information.

It may be understood that the specific descriptions of the logic circuit and the interface in this embodiment of this application are merely examples. For specific functions, steps, or the like performed by the logic circuit and the interface, refer to the foregoing method embodiments. Details are not described herein again.

In the foregoing embodiments, for descriptions of the first slot, the delay spread, the first CP, the first indication information, the second indication information, and the like, refer to the descriptions in the foregoing method embodiments. Details are not described herein again.

It may be understood that the communication apparatuses shown in embodiments of this application may implement the method provided in embodiments of this application in a form of hardware, or may implement the method provided in embodiments of this application in a form of software, or the like. This is not limited in embodiments of this application.

An embodiment of this application further provides a communication system. The communication system includes a first communication apparatus and a second communication apparatus. The first communication apparatus and the second communication apparatus are configured to perform the method in any one of the foregoing embodiments.

An embodiment of this application further provides a communication system. The communication system includes a terminal device and a network device. The terminal device and the network device are configured to perform the method in any one of the foregoing embodiments.

In addition, this application further provides a computer program. The computer program is used to implement operations and/or processing performed by the first communication apparatus or the terminal device in the methods provided in this application.

This application further provides a computer program. The computer program is used to implement operations and/or processing performed by the second communication apparatus or the network device in the methods provided in this application.

This application further provides a computer-readable storage medium. The computer-readable storage medium stores computer code. When the computer code is run on a computer, the computer is caused to perform operations and/or processing performed by the first communication apparatus or the terminal device in the methods provided in this application.

This application further provides a computer-readable storage medium. The computer-readable storage medium stores computer code. When the computer code is run on a computer, the computer is caused to perform operations and/or processing performed by the second communication apparatus or the network device in the methods provided in this application.

This application further provides a computer program product. The computer program product includes computer code or a computer program. When the computer code or the computer program is run on a computer, operations and/or processing performed by the first communication apparatus or the terminal device in the methods provided in this application are/is performed.

This application further provides a computer program product. The computer program product includes computer code or a computer program. When the computer code or the computer program is run on a computer, operations and/or processing performed by the second communication apparatus or the network device in the methods provided in this application are/is performed.

In the several embodiments provided in this application, it should be understood that the disclosed system, apparatus, and method may be implemented in other manners. For example, the described apparatus embodiments are merely examples. For example, division into the units is merely logical function division and there may be other division manners during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or the units may be implemented in electrical, mechanical, or other forms.

The units described as separate parts may or may not be physically separate, and parts displayed as units may or may not be physical units, may be located in one position, or may be distributed on a plurality of network units. Some or all of the units may be selected based on an actual requirement to achieve the technical effects of the solutions provided in embodiments of this application.

In addition, functional units in embodiments of this application may be integrated into one processing unit, each of the units may exist alone physically, or two or more units may be integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of this application essentially, or the part contributing to the conventional technology, or all or some of the technical solutions may be implemented in a form of a software product. The computer software product is stored in a readable storage medium and includes several instructions for instructing a computer device (which may be a personal computer, a server, or a network device) to perform all or some of the steps of the methods described in embodiments of this application. The foregoing readable storage medium includes: any medium that can store program code, for example, a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A symbol processing method, applied to a first communication apparatus, and comprising:
generating a first slot, wherein the first slot comprises a plurality of orthogonal frequency division multiplexing OFDM symbols, the plurality of OFDM symbols comprise a first OFDM symbol and a second OFDM symbol, the first OFDM symbol is a 1^{st} OFDM symbol among the plurality of OFDM symbols, the first OFDM symbol comprises a first cyclic prefix CP, the second OFDM symbol comprises a second CP, a length of the first CP is greater than a length of the second CP, the length of the first CP is greater than a first value, and the first value corresponds to a subcarrier spacing; and
sending the first slot.

2. The method according to claim 1, wherein the first communication apparatus is a network device, and the method further comprises:
determining the length of the first CP based on a delay spread of a first channel, wherein the delay spread is a difference in transmission delay of the first slot between a first transmission path and a second transmission path in the first channel, and the first channel carries the first slot.

3. The method according to claim 1, wherein the first communication apparatus is a terminal device, and the method further comprises:
receiving first indication information, wherein the first indication information indicates the length of the first CP.

4. The method according to claim 3, wherein the first indication information is carried in any of the following: downlink control information, radio resource control signaling, a media access control MAC control element CE, a system message SIB, or a physical downlink shared channel PDSCH.

5. The method according to claim 1, 3, or 4, wherein the first communication apparatus is a terminal device, the first slot is comprised in a first subframe, and the method further comprises:
receiving second indication information, wherein the second indication information comprises at least one of the following: a first timing advance TA, a start time of the first CP, or a second difference, wherein the first TA indicates a timing advance of a start time of the first subframe relative to an arrival time of a downlink subframe, the second difference is a difference between the start time of the first CP and a start time of a sixth symbol component in the first OFDM symbol, an end position of the sixth symbol component is an end position of the first CP, and a length of the sixth symbol component is greater than or equal to the length of the second CP; and
the sending the first slot comprises:
sending the first subframe based on the second indication information.

6. A symbol processing method, applied to a second communication apparatus, and comprising:
receiving a first slot, wherein the first slot comprises a plurality of orthogonal frequency division multiplexing OFDM symbols, the plurality of OFDM symbols comprise a first OFDM symbol and a second OFDM symbol, the first OFDM symbol is a 1^{st} OFDM symbol among the plurality of OFDM symbols, the first OFDM symbol comprises a first cyclic prefix CP, the second OFDM symbol comprises a second CP, a length of the first CP is greater than a length of the second CP, the length of the first CP is greater than a first value, and the first value corresponds to a subcarrier spacing; and
parsing the first slot.

7. The method according to claim 6, wherein the second communication apparatus is a network device, the first slot is comprised in a first subframe, and the method further comprises:
sending second indication information, wherein the second indication information comprises at least one of the following: a first timing advance TA, a start time of the first CP, or a second difference, wherein the first TA indicates a timing advance of a start time of the first subframe relative to an arrival time of a downlink subframe, the second difference is a difference between the start time of the first CP and a start time of a sixth symbol component in the first OFDM symbol, an end position of the sixth symbol component is an end position of the first CP, and a length of the sixth symbol component is greater than or equal to the length of the second CP.

8. The method according to claim 5 or 7, wherein the second indication information comprises the first TA, the first TA is determined based on a first difference or the length of the first CP, and the first difference is a difference between the length of the first CP and the length of the second CP.

9. The method according to claim 5, 7, or 8, wherein the start time of the first subframe is the start time of the sixth symbol component.

10. The method according to claim 9, wherein a value range of the first TA comprises (TA2-CP1+ΔT, TA2), wherein CP1 is the length of the first CP, ΔT is a delay spread of a first channel that carries the first subframe, TA2 is a TA corresponding to a second subframe, and the second subframe comprises a second slot, a length of a CP of a third OFDM symbol in the second slot is less than the length of the first CP and is greater than or equal to a length of a CP of another OFDM symbol in the second slot, and the third OFDM symbol is a 1^{st} OFDM symbol among a plurality of OFDM symbols used to carry a PUSCH or a PDSCH in the second slot.

11. The method according to claim 5, 7, or 8, wherein the start time of the first subframe is the start time of the first CP.

12. The method according to claim 11, wherein a value range of the first TA comprises (TA2-CP1+ΔT + ΔD, TA2+ΔD), wherein CP1 is the length of the first CP, ΔT is a delay spread of a first channel that carries the first subframe, ΔD is the first difference, TA2 is a TA corresponding to a second subframe, the second subframe comprises a second slot, a length of a CP of a third OFDM symbol in the second slot is less than the length of the first CP and is greater than or equal to a length of a CP of another OFDM symbol in the second slot, and the third OFDM symbol is a 1^{st} OFDM symbol among a plurality of OFDM symbols used to carry a PUSCH or a PDSCH, in the second slot.

13. The method according to any one of claims 5 and 7 to 12, wherein the second indication information comprises at least one of the following of the first TA: a quantity of sampling points corresponding to the first TA, a quantity of modulation symbols corresponding to the first TA, a duration corresponding to the first TA, or a quantity of unit time corresponding to the first TA.

14. The method according to any one of claims 5 and 7 to 13, wherein the second indication information is carried in any of the following: downlink control information, radio resource control signaling, a media access control MAC control element CE, a system message SIB, or a physical downlink shared channel PDSCH.

15. The method according to any one of claims 1 to 14, wherein when an index of the first OFDM symbol in the first subframe is 0 or 7 ∗ 2^{µ}, the first value is equal to (144β*2^{-µ}+16β); or
when an index of the first OFDM symbol in the first subframe is not equal to 0 or 7*2^{µ}, the first value is equal to 144β*2^{-µ},
wherein the first subframe comprises the first slot, β corresponds to a maximum subcarrier quantity and a maximum subcarrier spacing for transmission bandwidth, and µ corresponds to a subcarrier spacing configuration.

16. The method according to any one of claims 1 to 15, wherein the length of the first CP corresponds to the delay spread of the first channel, the delay spread is the difference in transmission delay of the first slot between the first transmission path and the second transmission path in the first channel, and the first channel carries the first slot.

17. The method according to claim 16, wherein the first transmission path is a first arrival transmission path among a plurality of transmission paths of the first channel, and the second transmission path is a last arrival transmission path among the plurality of transmission paths.

18. The method according to claim 16 or 17, wherein the length of the first CP is greater than or equal to the delay spread.

19. The method according to any one of claims 16 to 18, wherein the length of the first CP is determined based on the delay spread and at least one of a modulation and coding scheme MCS, a modulation scheme, or a code rate.

20. The method according to claim 19, wherein the length of the first CP is positively correlated with the MCS;
the length of the first CP is positively correlated with a modulation order corresponding to the modulation scheme; or
the length of the first CP is positively correlated with the code rate.

21. The method according to any one of claims 1 to 20, wherein the plurality of OFDM symbols are used to carry a physical downlink shared channel PDSCH or a physical uplink shared channel PUSCH.

22. The method according to any one of claims 1 to 21, wherein an end position of the first OFDM symbol is the same as a start position of the second OFDM symbol, and a first symbol component in the first OFDM symbol is the same as a second symbol component in the second OFDM symbol, wherein an end position of the first symbol component is the end position of the first OFDM symbol, the second symbol component is located before a third symbol component in the second OFDM symbol, an end position of the third symbol component is the same as an end position of the second OFDM symbol, a length of the third symbol component is less than or equal to the length of the second CP, and the second CP is obtained based on the third symbol component.

23. The method according to claim 22, wherein a fourth symbol component in the first OFDM symbol is the same as a fifth symbol component in the second OFDM symbol, a start position of the fourth symbol component is the same as the end position of the first CP, an end position of the second symbol component is the same as a start position of the fifth symbol component, an end position of the fifth symbol component is the same as a start position of the third symbol component, and a sum of lengths of the fifth symbol component and the third symbol component is equal to the length of the second CP.

24. A communication apparatus, comprising:
a processing unit, configured to generate a first slot, wherein the first slot comprises a plurality of orthogonal frequency division multiplexing OFDM symbols, the plurality of OFDM symbols comprise a first OFDM symbol and a second OFDM symbol, the first OFDM symbol is a 1^{st} OFDM symbol among the plurality of OFDM symbols, the first OFDM symbol comprises a first cyclic prefix CP, the second OFDM symbol comprises a second CP, a length of the first CP is greater than a length of the second CP, the length of the first CP is greater than a first value, and the first value corresponds to a subcarrier spacing; and
a transceiver unit, configured to send the first slot.

25. The apparatus according to claim 24, wherein the processing unit is further configured to determine the length of the first CP based on a delay spread of a first channel, wherein the delay spread is a difference in transmission delay of the first slot between a first transmission path and a second transmission path in the first channel, and the first channel carries the first slot.

26. The apparatus according to claim 24, wherein the transceiver unit is further configured to receive first indication information, wherein the first indication information indicates the length of the first CP.

27. The apparatus according to claim 26, wherein the first indication information is carried in any one of the following: downlink control information, radio resource control signaling, a media access control MAC control element CE, a system message SIB, or a physical downlink shared channel PDSCH.

28. The apparatus according to claim 24, 26, or 27, wherein the first slot is comprised in a first subframe, and the transceiver unit is further configured to receive second indication information, wherein the second indication information comprises at least one of the following: a first timing advance TA, a start time of the first CP, or a second difference, wherein the first TA indicates a timing advance of a start time of the first subframe relative to an arrival time of a downlink subframe, the second difference is a difference between the start time of the first CP and a start time of a sixth symbol component in the first OFDM symbol, an end position of the sixth symbol component is an end position of the first CP, and a length of the sixth symbol component is greater than or equal to the length of the second CP; and
the processing unit is further configured to send the first subframe via the transceiver unit based on the second indication information.

29. A communication apparatus, comprising:
a transceiver unit, configured to receive a first slot, wherein the first slot comprises a plurality of orthogonal frequency division multiplexing OFDM symbols, the plurality of OFDM symbols comprise a first OFDM symbol and a second OFDM symbol, the first OFDM symbol is a 1^{st} OFDM symbol among the plurality of OFDM symbols, the first OFDM symbol comprises a first cyclic prefix CP, the second OFDM symbol comprises a second CP, a length of the first CP is greater than a length of the second CP, the length of the first CP is greater than a first value, and the first value corresponds to a subcarrier spacing; and
a processing unit, configured to parse the first slot.

30. The apparatus according to claim 29, wherein the first slot is comprised in a first subframe, and the transceiver unit is further configured to send second indication information, wherein the second indication information comprises at least one of the following: a first timing advance TA, a start time of the first CP, or a second difference, wherein the first TA indicates a timing advance of a start time of the first subframe relative to an arrival time of a downlink subframe, the second difference is a difference between the start time of the first CP and a start time of a sixth symbol component in the first OFDM symbol, an end position of the sixth symbol component is an end position of the first CP, and a length of the sixth symbol component is greater than or equal to the length of the second CP.

31. The apparatus according to claim 28 or 30, wherein the second indication information comprises the first TA, the first TA is determined based on a first difference or the length of the first CP, and the first difference is a difference between the length of the first CP and the length of the second CP.

32. The apparatus according to claim 28, 30, or 31, wherein the start time of the first subframe is the start time of the sixth symbol component.

33. The apparatus according to claim 32, wherein a value range of the first TA comprises (TA2-CP1+ΔT, TA2), wherein CP1 is the length of the first CP, ΔT is a delay spread of a first channel that carries the first subframe, TA2 is a TA corresponding to a second subframe, and the second subframe comprises a second slot, a length of a CP of a third OFDM symbol in the second slot is less than the length of the first CP and is greater than or equal to a length of a CP of another OFDM symbol in the second slot, and the third OFDM symbol is a 1^{st} OFDM symbol among a plurality of OFDM symbols used to carry a PUSCH or a PDSCH in the second slot.

34. The apparatus according to claim 28, 30, or 31, wherein the start time of the first subframe is the start time of the first CP.

35. The apparatus according to claim 34, wherein a value range of the first TA comprises (TA2-CP1+ΔT + ΔD, TA2+ΔD), wherein CP1 is the length of the first CP, ΔT is a delay spread of a first channel that carries the first subframe, ΔD is the first difference, TA2 is a TA corresponding to a second subframe, the second subframe comprises a second slot, a length of a CP of a third OFDM symbol in the second slot is less than the length of the first CP and is greater than or equal to a length of a CP of another OFDM symbol in the second slot, and the third OFDM symbol is a 1^{st} OFDM symbol among a plurality of OFDM symbols used to carry a PUSCH or a PDSCH in the second slot.

36. The apparatus according to any one of claims 28 and 30 to 35, wherein the second indication information comprises at least one of the following of the first TA: a quantity of sampling points corresponding to the first TA, a quantity of modulation symbols corresponding to the first TA, duration corresponding to the first TA, or a quantity of unit time corresponding to the first TA.

37. The apparatus according to any one of claims 28 and 30 to 36, wherein the second indication information is carried in any one of the following: downlink control information, radio resource control signaling, a media access control MAC control element CE, a system message SIB, or a physical downlink shared channel PDSCH.

38. The apparatus according to any one of claims 24 to 37, wherein when an index of the first OFDM symbol in the first subframe is 0 or 7 ∗ 2^{µ}, the first value is equal to (144β*2^{-µ}+16β); or
when an index of the first OFDM symbol in the first subframe is not equal to 0 or 7*2^{µ}, the first value is equal to 144β*2^{-µ},
wherein the first subframe comprises the first slot, β corresponds to a maximum subcarrier quantity and a maximum subcarrier spacing for transmission bandwidth, and µ corresponds to a subcarrier spacing configuration.

39. The apparatus according to any one of claims 24 to 38, wherein the length of the first CP corresponds to the delay spread of the first channel, the delay spread is the difference in transmission delay of the first slot between the first transmission path and the second transmission path in the first channel, and the first channel carries the first slot.

40. The apparatus according to claim 39, wherein the first transmission path is a first arrival transmission path in a plurality of transmission paths of the first channel, and the second transmission path is a last arrival transmission path in the plurality of transmission paths.

41. The apparatus according to claim 39 or 40, wherein the length of the first CP is greater than or equal to the delay spread.

42. The apparatus according to any one of claims 39 to 41, wherein the length of the first CP is determined based on the delay spread and at least one of a modulation and coding scheme MCS, a modulation scheme, or a code rate.

43. The apparatus according to claim 42, wherein the length of the first CP is positively correlated with the MCS;
the length of the first CP is positively correlated with a modulation order corresponding to the modulation scheme; or
the length of the first CP is positively correlated with the code rate.

44. The apparatus according to any one of claims 24 to 43, wherein the plurality of OFDM symbols are used to carry a physical downlink shared channel PDSCH or a physical uplink shared channel PUSCH.

45. The apparatus according to any one of claims 24 to 44, wherein an end position of the first OFDM symbol is the same as a start position of the second OFDM symbol, and a first symbol component in the first OFDM symbol is the same as a second symbol component in the second OFDM symbol, wherein an end position of the first symbol component is the end position of the first OFDM symbol, the second symbol component is located before a third symbol component in the second OFDM symbol, an end position of the third symbol component is the same as an end position of the second OFDM symbol, a length of the third symbol component is less than or equal to the length of the second CP, and the second CP is obtained based on the third symbol component.

46. The apparatus according to claim 45, wherein a fourth symbol component in the first OFDM symbol is the same as a fifth symbol component in the second OFDM symbol, a start position of the fourth symbol component is the same as the end position of the first CP, an end position of the second symbol component is the same as a start position of the fifth symbol component, an end position of the fifth symbol component is the same as a start position of the third symbol component, and a sum of lengths of the fifth symbol component and the third symbol component is equal to the length of the second CP.

47. A communication apparatus, comprising a processor and a memory, wherein
the memory is configured to store instructions; and
the processor is configured to execute the instructions, to perform the method according to any one of claims 1 to 23.

48. A communication apparatus, comprising a logic circuit and an interface, wherein the logic circuit is coupled to the interface; and
the interface is configured to input and/or output code instructions, and the logic circuit is configured to execute the code instructions, to perform the method according to any one of claims 1 to 23.

49. A computer-readable storage medium, wherein the computer-readable storage medium is configured to store a computer program, and when the computer program is executed, the method according to any one of claims 1 to 23 is performed.

50. A computer program, wherein when the computer program is executed, the method according to any one of claims 1 to 23 is performed.

51. A communication system, wherein the communication system comprises a first communication apparatus and a second communication apparatus, the first communication apparatus is configured to perform the method according to any one of claims 1 to 5 and 8 to 23, and the second communication apparatus is configured to perform the method according to any one of claims 6 to 23.
